# EUROPEAN PATENT APPLICATION

(11) **EP 3 974 385 A1**
(43) Date of publication of application: **30.03.2022**
(21) Application number: 20198196.6
(22) Date of filing: 24.09.2020
(51) Int. Cl.: C01F 5/24, C01F 11/00, C09C 1/02

(54) **A MOISTURE-CURING ONE-COMPONENT POLYMER COMPOSITION COMPRISING A NATURAL GROUND CALCIUM CARBONATE (GCC)**

(71) Applicant: Omya International AG, 4665 Oftringen (CH)
(72) Inventor: BATTISTI, Andrea, 8050 Zürich (CH); WISCHNEWSKI, Nina, 4852 Rothrist (CH); GANTENBEIN, Daniel, 4056 Basel (CH); ORTEN, Rolf Endre, 6425 Molde (NO); DUFFY, John, Hatboro, PA Pennsylvania 19040 (US)
(74) Representative: Maiwald Patent- und Rechtsanwaltsgesellschaft mbH

(57) **Abstract**

The present invention relates to a moisture-curing one-component polymer composition comprising a polymer material and a natural ground calcium carbonate (GCC), a cured product obtained by curing the moisture-curing one-component polymer composition, a process for preparing such a moisture-curing one-component polymer composition as well as a process for preparing such a cured product and the use of a natural ground calcium carbonate (GCC) for decreasing the processing time for preparing such a moisture-curing one-component polymer composition and/or increasing the elongation at break of such a cured product.

## Description

The present invention relates to a moisture-curing one-component polymer composition comprising a polymer material and a natural ground calcium carbonate (GCC), a cured product obtained by curing the moisture-curing one-component polymer composition, a process for preparing such a moisture-curing one-component polymer composition as well as a process for preparing such a cured product and the use of a natural ground calcium carbonate (GCC) for decreasing the processing time for preparing such a moisture-curing one-component polymer composition and/or increasing the elongation at break of such a cured product.

Calcium carbonates such as ground calcium carbonate (GCC) and precipitated calcium carbonate are widely used in adhesive and sealant compositions as rheology modifier, cost-reducing filler, tensile strength enhancer, toughening agent, opacifier and/or whitening agent. For example, US20070167531 A1 refers to a natural alkaline earth metal carbonate in particulate form having a *d*₅₀ of about 0.5 µm or less and a moisture pick up of less than about 0.2 wt % for use in a two-component polyurethane system. US6645339 B1 refers to a method for providing enhanced adhesion to magnesium-based substrates comprising the steps of:a) providing a composition comprising: (i) at least one polymerizable silicone component; (ii) at least one amino-containing silane adhesion promoter; and (iii) at least one filler; b) disposing said composition between two substrates, at least one of which is magnesium-based; and c) curing said composition to effectuate enhanced adhesion thereof. US7186763 B2 refers to a paste resin composition containing surface-treated calcium carbonate which results from surface treatment of calcium carbonate having a BET specific surface area of 10-100 m²/g with an unsaturated fatty acid (A) and a saturated fatty acid (B), characterized in that said surface-treated calcium carbonate exhibits a modal pore size peak at below 0.03 µm and a modal pore volume of 0.05-0.5 cm³/g on a pore size distribution curve derived from mercury porosimetry, and the (A)/(B) blending ratio of said unsaturated fatty acid (A) and saturated fatty acid (B) is 0.5-1.9. According to the examples, the surface-treated calcium carbonate has a moisture content ranging from 0.35 to 0.58 %. Thus, the surface-treated calcium carbonate has a relatively high moisture content and is as such not considered to be suitable for moisture-curing one-component polymer compositions. US8513328 (B2) refers to a wall assembly comprising a one-part room temperature vulcanizing (RTV) silicone based air and water barrier adhesive composition comprising inter alia up to about 20 wt. % of a treated fumed silica reinforcing filler; and up to about 60 wt. % of at least one of a stearic acid treated ground calcium carbonate extending filler; and, a precipitated calcium carbonate filler. However, the use of precipitated calcium carbonate (PCC) has the disadvantage that PCC has a relatively high moisture content, which is unsuitable for moisture-curing polymer compositions such that a complex and expensive drying of the PCC must be applied prior the contacting of the PCC with the polymer. Furthermore, the moisture susceptibility of the PCC results in a low storage stability of such compositions.

US9732261 B2 refers to a polyorganosiloxane composition X which can be crosslinked to give an elastomer in the presence of water via a polycondensation reaction *inter alia* comprising an amount of greater than 35% by weight, relative to the total amount of the composition, of at least one ground natural calcium carbonate B which has a specific surface area strictly less than 3 m²/g, measured according to the BET method, and which has been surface-treated with at least one compound selected from the group consisting of: a paraffin, a fatty acid, a fatty acid salt, and a mixture thereof. According to the examples, BLR^{®} 3 and Omyabond^{®} 520FL having a *d*₅₀ of 6.5 and 2 µm, respectively, may be used in the composition as ground natural calcium carbonate.

Compositions suitable for preparing adhesive and sealants are typically subdivided into 1-component (1K) and 2-component (2K), which are well known in the art and are widely used to bond or seal metals, plastics, composites, wood or different materials thereof with each other. They are often used in industry in the initial construction of articles as well as for repair of articles.

Moisture-curing 1K compositions such as moisture-curing1K adhesive and sealant compositions require specific conditions to start the curing process, i.e. humidity, until this condition is met the composition will not bond or seal. Therefore, the packaging, processing and dispensing of these compositions must be carefully chosen to ensure that the composition does not start to cure before it reaches its destination. A main advantage of 1K compositions such as 1K adhesive and sealant compositions is the ease of use because there is no potential error in mixing and they adhere to most surfaces without priming. Furthermore, 1K compositions such as 1K adhesive and sealant compositions can be made sag resistant by adding about 15% of PVC powder and allowing this to reach an exact degree of plasticizer swelling by heating the mixture to a temperature of about 70°C for e.g. 20 minutes. However, to achieve a controlled level of swelling, and therefore the needed rheological properties of such compositions, the process temperature must be maintained precisely, i.e. within a range of 1°C, which is both difficult to control as well as difficult to achieve with homogeneity in an industrial mixer having a load of typically 800 to 1600 kg.

Contrary thereto, 2K compositions such as 2K adhesive and sealant compositions consist of a resin and a crosslinking agent component which cure once the two components are mixed together. They remain stable in storage as long as the two components are separate from each other. However, 2K compositions have a high risk of potential error in mixing as 2-component products are designed to be dispensed in a set ratio to gain the desired properties from the composition. Reaction between the two components normally begins immediately once they are mixed and the viscosity increases until they are no longer usable. This is known as open time or pot life. Once cured 2K compositions such as 2K adhesive and sealant compositions are tough and rigid with good temperature and chemical resistance. A main advantage of 2K compositions is that it is easier to formulate a fast curing 2K composition as the separation of the resin and a crosslinking agent component offer less restrictions in composition and thus more possibilities for varying the composition of the 2K compositions.

In view of the foregoing, there is an ongoing need for moisture-curing 1 K compositions such as moisture-curing 1K adhesive and sealant compositions with excellent processing properties, storage stability and mechanical as well as rheological properties.

Accordingly, it is an object of the present invention to provide a moisture-curing 1K composition with excellent mechanical properties, and in particular, with an excellent elongation at break. Furthermore, it is desirable to provide a moisture-curing 1K composition with excellent processing properties and in particular, with an excellent processing time. In addition thereto, it is desirable to provide a moisture-curing 1K composition with an excellent storage stability, skin time and rheological properties such as sag resistance. Furthermore, it is desirable to provide a moisture-curing 1K composition with an excellent heat stability and adhesion properties.

The foregoing and other objects are solved by the subject-matter as defined in the independent claims. Advantageous embodiments of the present invention are defined in the corresponding subclaims.

According to one aspect of the present invention, a moisture-curing one-component polymer composition comprising a polymer material and a natural ground calcium carbonate (GCC) is provided, the natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and iii) a residual moisture content of ≤ 0.2 wt.-%, based on the total dry weight of the natural ground calcium carbonate (GCC).

It has surprisingly been found out by the inventors that a natural ground calcium carbonate (GCC) with low moisture content and submicrometric particle size can exchange PVC powder as a rheological modifier in a moisture-curing 1K composition such as a moisture-curing 1K adhesive and sealant composition and thus results in an excellent rheological properties, especially in an excellent sag resistance. Moreover, the moisture-curing 1K compositions such as moisture-curing 1K adhesive and sealant compositions of the present invention can be prepared in less than 1 hour and thus provide excellent processing properties in terms of processing time. By comparison, 1K compositions comprising PVC can be prepared in more than 4 to 12 hours. Furthermore, if a mixer is used heavily, especially for construction sealants in the local "peak building" season, this can translate to a threefold increase in manufacturing capacity without capital expenditure. In addition thereto, the natural ground calcium carbonate (GCC) can be easily dispersed at room temperature and does not require additional drying steps such that the moisture-curing 1K composition such as a moisture-curing 1K adhesive and sealant composition of the present invention has an excellent storage stability. Furthermore, the moisture-curing 1K compositions such as 1K adhesive and sealant compositions of the present invention have excellent mechanical properties, especially an excellent elongation at break. In addition thereto, the moisture-curing 1K compositions such as 1K adhesive and sealant compositions of the present invention have excellent rheological properties such as sag resistance, and skin time, and excellent heat stability and adhesion properties.

According to one embodiment, the natural ground calcium carbonate (GCC) is selected from the group consisting of marble, limestone, dolomite, chalk and mixtures thereof.

According to another embodiment, the natural ground calcium carbonate (GCC) has i) i) a weight median particle size *d*₅₀ value measured by the sedimentation method of ≤ 0.6 µm, preferably of ≤ 0.4 µm, more preferably in the range from 0.1 µm to 0.4 µm and most preferably in the range from 0.2 µm to 0.4 µm, and/or ii) a top cut (*d*₉₈) measured by the sedimentation method of 0.3 to 3.0 µm, more preferably of 0.5 to 2.0 µm, and most preferably of 0.5 to 1.5 µm, and/or iii) a specific surface area (BET) of from 10 to 40 m²/g as measured using nitrogen and the BET method according to ISO 9277:2010, preferably from 10 to 32 m²/g, more preferably from 12 to 28 m²/g and most preferably from 12 to 25 m²/g, and/or a residual moisture content of ≤ 0.15 wt.-%, e.g. from 0.05 to ≤ 0.15 wt.-%, and most preferably of ≤ 0.1 wt.-%, e.g. from 0.05 to ≤ 0.1 wt.-%, based on the total dry weight of the natural ground calcium carbonate (GCC).

According to yet another embodiment, the natural ground calcium carbonate (GCC) is treated with at least one surface-treatment agent selected from the group consisting of I) a phosphoric acid ester blend of one or more phosphoric acid mono ester and/or salts thereof and/or one or more phosphoric acid di-ester and/or salts thereof, and/or II) at least one saturated or unsaturated aliphatic linear or branched carboxylic acid and/or salts thereof, preferably at least one aliphatic carboxylic acid having a total amount of carbon atoms from C4 to C24 and/or a salt thereof, more preferably at least one aliphatic carboxylic acid having a total amount of carbon atoms from C12 to C20 and/or a salt thereof, most preferably at least one aliphatic carboxylic acid having a total amount of carbon atoms from C16 to C18 and/or a salt thereof and/or III) at least one mono-substituted succinic anhydride consisting of succinic anhydride mono-substituted with a group selected from a linear, branched, aliphatic and cyclic group having a total amount of carbon atoms from at least C2 to C30 in the substituent and/or salts thereof, and/or IV) at least one polydialkylsiloxane, and V) mixtures of one or more materials according to I) to IV).

According to one embodiment, the polymer material is a moisture-curing polymer material, preferably the polymer material is selected from the group comprising polyurethane, silyl-modified polyurethane, polyurea, silyl-modified polyurea, silicone, polyether polymers with terminal silane groups, polysulfide polymers with terminal silane groups, poly(meth)acrylate, and mixtures thereof.

According to another embodiment, the polymer composition comprises the natural ground calcium carbonate (GCC) in an amount ranging from 20 to 65 wt.-%, based on the total weight of the polymer composition, preferably from 30 to 60 wt.-%, more preferably from 35 to 55 wt.-% and most preferably from 35 to 50 wt.-%.

According to yet another embodiment, the polymer composition further comprises a crosslinking agent and plasticizer as additives and optionally further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin.

According to one embodiment, the at least one surface-treatment agent is present on the natural ground calcium carbonate (GCC) in an amount ranging from 0.5 to 4.5 wt.-% based on the total weight of the natural ground calcium carbonate (GCC).

According to another embodiment, the polymer composition is a sealant or adhesive composition.

According to a further aspect of the present invention, a cured product, preferably a sealant or adhesive, obtained by curing the moisture-curing one-component polymer, as defined herein, is provided, wherein the cured product has an elongation at break of more than 600 %, determined according to ISO 37:2011, preferably more than 700 %, more preferably more than 750 %.

According to still a further aspect of the present invention, a process for preparing a moisture-curing one-component polymer composition, as defined herein, is provided, wherein the process comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d) in any order.

According to one embodiment, in contacting step e) firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent of step c).

According to another embodiment, the crosslinking agent is contacted under mixing, in one or more steps, with the mixture obtained by contacting the natural ground calcium carbonate (GCC) with the plasticizer before, during or after, preferably during, said mixture is contacted with the polymer material.

According to yet another embodiment, the further optional additives of step d) are contacted under mixing, in one or more steps, with the mixture obtained by contacting the natural ground calcium carbonate (GCC) with the plasticizer before, during or after, preferably after, said mixture is contacted with the polymer material and the crosslinking agent.

According to still a further aspect of the present invention, a process for preparing a cured product, preferably a sealant or adhesive, as defined herein, is provided, wherein the process comprises the steps of
i) providing the moisture-curing one-component polymer composition as defined herein, and
ii) curing the composition in step i) such that the cured product is formed.

According to still a further aspect of the present invention, use of a natural ground calcium carbonate (GCC) is provided having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC), for decreasing the processing time for preparing a moisture-curing one-component polymer composition and/or increasing the elongation at break of a cured product, preferably a sealant or adhesive, compared to a moisture-curing one-component polymer composition and cured product, preferably a sealant or adhesive, respectively, prepared in the absence of a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC).

It should be understood that for the purpose of the present invention, the following terms have the following meaning:
As used herein, the term "polymer material" refers to a polymerisable material or a polymer precursor comprising reactive groups which are converted into a cured product by a curing reaction, initiated e.g. by moisture or heat.

A "moisture-curing one-component (or 1K)" polymer composition is a polymer composition comprising a polymer material and a crosslinking agent that requires humidity, for example environmental humidity, to start the curing process.

For the purposes of the present invention, a "polymerisable material" is a polymer, which comprises reactive sites which upon reaction with the crosslinking agent forms a cured product.

The term "surface-treated" in the meaning of the present invention refers to a material which has been contacted with a surface treatment agent such as to obtain a coating layer on at least a part of the surface of the material.

The "particle size" of particulate materials herein is described by its weight-based distribution of particle sizes dₓ. Therein, the value dₓ represents the diameter relative to which x % by weight of the particles have diameters less than dₓ. This means that, for example, the d₂₀ value is the particle size at which 20 wt.-% of all particles are smaller than that particle size. The d₅₀ value is thus the weight median particle size, i.e. 50 wt.-% of all particles are smaller than this particle size. For the purpose of the present invention, the particle size is specified as weight median particle size *d*₅₀(wt) unless indicated otherwise. Particle sizes were determined by using Sedigraph^{™} 5120 instrument of Micromeritics Instrument Corporation. The method and the instrument are known to the skilled person and are commonly used to determine the particle size of fillers and pigments. The measurements were carried out in an aqueous solution of 0.1 wt.-% Na₄P₂O₇.

The "specific surface area" (expressed in m²/g) of a material as used throughout the present document can be determined by the Brunauer Emmett Teller (BET) method with nitrogen as adsorbing gas and by use of a ASAP 2460 instrument from Micromeritics. The method is well known to the skilled person and defined in ISO 9277:2010. Samples are conditioned at 100 °C under vacuum for a period of 30 min prior to measurement. The total surface area (in m²) of said material can be obtained by multiplication of the specific surface area (in m²/g) and the mass (in g) of the material.

Unless specified otherwise, the term "residual moisture content" refers to a process according to which at least a portion of water is removed from a material such that a constant weight of the obtained "dried" material at 105°C is reached. In general, a "dried" or "dry" material has a residual moisture content, unless specified otherwise, of less than or equal to 0.2 wt. %, based on the total dry weight of the natural ground calcium carbonate (GCC).

Contrary thereto, the "moisture pick-up susceptibility" refers to the ability of the material to adsorb some moisture when put in a humid environment. For this, the material is conditioned at 10% humidity, the weight is measured, then the conditions are changed to 85% relative humidity, then the weight of the material is measured again. The difference in weight corresponds to the moisture pick-up susceptibility.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

The moisture-curing one-component polymer composition of the present invention comprises a polymer material and a natural ground calcium carbonate (GCC), the natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and iii) a residual moisture content of ≤ 0.2 wt.-%, based on the total dry weight of the natural ground calcium carbonate (GCC)

In the following, preferred embodiments of the inventive products will be set out in more detail. It is to be understood that these embodiments and details also apply to the inventive methods for their preparation and their uses described herein.

### The moisture-curing one-component polymer composition

The moisture-curing one-component polymer composition of the present invention comprises natural ground calcium carbonate (GCC).

The natural ground calcium carbonate (GCC) may be provided in any suitable dry form, e.g. as powder and/or in pressed or granulated form. However, in order to provide a homogeneous distribution of the natural ground calcium carbonate (GCC) in the polymer composition, and the cured product, the natural ground calcium carbonate (GCC) is preferably provided as powder.

"Natural ground calcium carbonate" (also called "ground calcium carbonate") (GCC) in the meaning of the present invention is a calcium carbonate obtained from natural sources, such as marble, limestone, dolomite, chalk and/or mixtures thereof, and processed through a wet and/or dry treatment such as grinding, screening and/or fractionating, for example, by a cyclone or classifier.

According to one embodiment, the natural ground calcium carbonate (GCC) is selected from the group consisting of marble, limestone, dolomite, chalk and mixtures thereof. The natural ground calcium carbonate (GCC) may comprise further components typically occurring in natural sources such as magnesium carbonate, alumino silicate etc.

"Dolomite" in the meaning of the present invention is a calcium carbonate containing mineral, namely a carbonic calcium-magnesium-mineral, having the chemical composition of CaMg(CO₃)₂ ("CaCO₃ · MgCO₃"). A dolomite mineral may contain at least 30.0 wt.-% MgCO₃, based on the total weight of dolomite, preferably more than 35.0 wt.-%, and more preferably more than 40.0 wt.-% MgCO₃.

In general, the grinding of natural ground calcium carbonate (GCC) may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled person. In case the natural ground calcium carbonate (GCC) comprises a wet ground natural ground calcium carbonate (GCC), the grinding step may be performed under conditions such that autogenous grinding takes place and/or by horizontal ball milling, and/or other such processes known to the skilled person. The wet processed natural ground calcium carbonate (GCC) thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

Contrary thereto, "precipitated calcium carbonate" (PCC) refers to a synthesized material, generally obtained by precipitation following reaction of carbon dioxide and calcium hydroxide in an aqueous, semi-dry or humid environment or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried. PCCs are described, for example, in EP2447213 A1, EP2524898 A1, EP2371766 A1, EP1712597 A1, EP1712523 A1, or WO2013/142473 A1.

In view of this, natural ground calcium carbonate (GCC) can be easily differentiated from precipitated calcium carbonate (PCC). In particular, natural ground calcium carbonate (GCC) has a low moisture content as such compared to precipitated calcium carbonate (PCC) and thus does not require an energy intensive and complex drying step prior to the incorporation in the moisture-curing 1K composition of the present invention. Furthermore, the incorporation of natural ground calcium carbonate (GCC) in the present moisture-curing 1K composition provides a high elongation at break, which is not obtained when precipitated calcium carbonate (PCC) is used in the same composition.

Preferably, the natural ground calcium carbonate (GCC) is marble, limestone or chalk. More preferably, the natural ground calcium carbonate (GCC) is marble or limestone. Most preferably, the natural ground calcium carbonate (GCC) is marble.

In this regard, it is required that the natural ground calcium carbonate (GCC) fulfils specific characteristics in order to provide excellent mechanical properties such as an elongation at break for the corresponding cured product and to provide an excellent storage stability and excellent rheological properties such as sag resistance as well as heat stability, skin time and adhesion properties of the uncured product, i.e. the moisture-curing one-component polymer composition.

One requirement is that the natural ground calcium carbonate (GCC) has a specifically low weight median particle size *d*₅₀ value.

In particular, it has been found out that the natural ground calcium carbonate (GCC) must have a weight median particle size *d*₅₀ value measured by the sedimentation method of ≤ 0.8 µm. For example, the natural ground calcium carbonate (GCC) has a weight median particle size *d*₅₀ value measured by the sedimentation method of ≤ 0.6 µm, preferably of ≤ 0.4 µm, more preferably in the range from 0.1 µm to 0.4 µm and most preferably in the range from 0.2 µm to 0.4 µm.

Additionally, the natural ground calcium carbonate (GCC) must have a high specific surface area.

In particular, it has been found out that the natural ground calcium carbonate (GCC) must have a specific surface area (BET) of at least 10 m²/g as measured using nitrogen and the BET method according to ISO 9277:2010. For example, the natural ground calcium carbonate (GCC) has a specific surface area (BET) of from 10 to 40 m²/g as measured using nitrogen and the BET method according to ISO 9277:2010, preferably from 10 to 32 m²/g, more preferably from 12 to 28 m²/g and most preferably from 12 to 25 m²/g.

Additionally, the natural ground calcium carbonate (GCC) must have a very low residual moisture content. Such a low moisture content is especially suitable for providing an excellent storage stability.

In particular, it has been found out that the natural ground calcium carbonate (GCC) must have a residual moisture content of ≤ 0.2 wt.-%, based on the total dry weight of the natural ground calcium carbonate (GCC). Preferably, the natural ground calcium carbonate (GCC) has a residual moisture content of ≤ 0.15 wt.-%, and most preferably of ≤ 0.1 wt.-%, based on the total dry weight of the natural ground calcium carbonate (GCC). For example, the natural ground calcium carbonate (GCC) has a residual moisture content ranging from 0.03 to ≤ 0.2 wt.-%, preferably from 0.05 to ≤ 0.15 wt.-%, and most preferably from 0.05 to ≤ 0.1 wt.-%, based on the total dry weight of the natural ground calcium carbonate (GCC).

Thus, the natural ground calcium carbonate (GCC) must have
i) a weight median particle size *d*₅₀ value measured by the sedimentation method of ≤ 0.8 µm, and
ii) a specific surface area (BET) of at least 10 m²/g as measured using nitrogen and the BET method according to ISO 9277:2010, and
iii) a residual moisture content of ≤ 0.2 wt.-%, based on the total dry weight of the natural ground calcium carbonate (GCC).

For example, the natural ground calcium carbonate (GCC) is marble have
i) a weight median particle size *d*₅₀ value measured by the sedimentation method of ≤ 0.8 µm, and
ii) a specific surface area (BET) of at least 10 m²/g as measured using nitrogen and the BET method according to ISO 9277:2010, and
iii) a residual moisture content of ≤ 0.2 wt.-%, based on the total dry weight of the natural ground calcium carbonate (GCC).

In one embodiment, the natural ground calcium carbonate (GCC), preferably marble, has
i) a weight median particle size *d*₅₀ value measured by the sedimentation method of ≤ 0.8 µm, preferably of ≤ 0.6 µm, more preferably of ≤ 0.4 µm, even more preferably in the range from 0.1 µm to 0.4 µm and most preferably in the range from 0.2 µm to 0.4 µm, and
ii) a specific surface area (BET) of at least 10 m²/g as measured using nitrogen and the BET method according to ISO 9277:2010, and
iii) a residual moisture content of ≤ 0.2 wt.-%, based on the total dry weight of the natural ground calcium carbonate (GCC).

In another embodiment, the natural ground calcium carbonate (GCC), preferably marble, has
i) a weight median particle size *d*₅₀ value measured by the sedimentation method of ≤ 0.8 µm, and
ii) a specific surface area (BET) of at least 10 m²/g as measured using nitrogen and the BET method according to ISO 9277:2010, preferably from 10 to 40 m²/g, more preferably from 10 to 32 m²/g, even more preferably from 12 to 28 m²/g and most preferably from 12 to 25 m²/g, and
iii) a residual moisture content of ≤ 0.2 wt.-%, based on the total dry weight of the natural ground calcium carbonate (GCC).
   In another embodiment, the natural ground calcium carbonate (GCC), preferably marble, has
iv) a weight median particle size *d*₅₀ value measured by the sedimentation method of ≤ 0.8 µm, and
v) a specific surface area (BET) of at least 10 m²/g as measured using nitrogen and the BET method according to ISO 9277:2010, and
vi) a residual moisture content of ≤ 0.2 wt.-%, e.g. from 0.03 to ≤ 0.2 wt.-%, preferably of ≤ 0.15 wt.-%, e.g. from 0.05 to ≤ 0.15 wt.-%, and most preferably of ≤ 0.1 wt.-%, e.g. from 0.05 to ≤ 0.1 wt.-%, based on the total dry weight of the natural ground calcium carbonate (GCC).

In a preferred embodiment, the natural ground calcium carbonate (GCC), preferably marble, has
i) a weight median particle size *d*₅₀ value measured by the sedimentation method of ≤ 0.8 µm, more preferably of ≤ 0.4 µm, even more preferably in the range from 0.1 µm to 0.4 µm and most preferably in the range from 0.2 µm to 0.4 µm, and
ii) a specific surface area (BET) of at least 10 m²/g as measured using nitrogen and the BET method according to ISO 9277:2010, preferably from 10 to 40 m²/g, more preferably from 10 to 32 m²/g, even more preferably from 12 to 28 m²/g and most preferably from 12 to 25 m²/g, and
iii) a residual moisture content of ≤ 0.2 wt.-%, e.g. from 0.03 to ≤ 0.2 wt.-%, preferably of ≤ 0.15 wt.-%, e.g. from 0.05 to ≤ 0.15 wt.-%, and most preferably of ≤ 0.1 wt.-%, e.g. from 0.05 to ≤ 0.1 wt.-%, based on the total dry weight of the natural ground calcium carbonate (GCC).

For example, the natural ground calcium carbonate (GCC), preferably marble, has
i) a weight median particle size *d*₅₀ value measured by the sedimentation method in the range from 0.2 µm to 0.4 µm, and
ii) a specific surface area (BET) as measured using nitrogen and the BET method according to ISO 9277:2010in the range from 12 to 25 m²/g, and
iii) a residual moisture content ranging from 0.05 to ≤ 0.1 wt.-%, based on the total dry weight of the natural ground calcium carbonate (GCC).

Additionally, the natural ground calcium carbonate (GCC), preferably marble, may have a top cut (*d*₉₈) measured by the sedimentation method of 0.3 to 3.0 µm, more preferably of 0.5 to 2.0 µm, and most preferably of 0.5 to 1.5 µm.

In one embodiment, the natural ground calcium carbonate (GCC), preferably marble, thus has
i) a weight median particle size *d*₅₀ value measured by the sedimentation method of ≤ 0.8 µm, more preferably of ≤ 0.4 µm, even more preferably in the range from 0.1 µm to 0.4 µm and most preferably in the range from 0.2 µm to 0.4 µm, and
ii) a specific surface area (BET) of at least 10 m²/g as measured using nitrogen and the BET method according to ISO 9277:2010, preferably from 10 to 40 m²/g, more preferably from 10 to 32 m²/g, even more preferably from 12 to 28 m²/g and most preferably from 12 to 25 m²/g, and
iii) a residual moisture content of ≤ 0.2 wt.-%, e.g. from 0.03 to ≤ 0.2 wt.-%, preferably of ≤ 0.15 wt.-%, e.g. from 0.05 to ≤ 0.15 wt.-%, and most preferably of ≤ 0.1 wt.-%, e.g. from 0.05 to ≤ 0.1 wt.-%, based on the total dry weight of the natural ground calcium carbonate (GCC), and
iv) a top cut (*d*₉₈) measured by the sedimentation method of 0.3 to 3.0 µm, more preferably of 0.5 to 2.0 µm, and most preferably of 0.5 to 1.5 µm.

It is preferred that the natural ground calcium carbonate (GCC), preferably marble, is treated with at least one surface-treatment agent and thus is preferably a surface-treated natural ground calcium carbonate (GCC).

A "surface-treatment agent" in the meaning of the present invention is any material, which is capable of reacting and/or forming an adduct with the surface of the natural ground calcium carbonate (GCC), thereby forming a surface-treatment layer on at least a part of the surface of the natural ground calcium carbonate (GCC). It should be understood that the present invention is not limited to any particular surface-treatment agents. The skilled person knows how to select suitable materials for use as surface-treatment agents.

The term "at least one" surface-treatment agent in the meaning of the present invention means that the surface-treatment agent comprises, preferably consists of, one or more surface-treatment agent(s).

In one embodiment of the present invention, the at least one surface-treatment agent comprises, preferably consists of, one surface-treatment agent. Alternatively, the at least one surface-treatment agent comprises, preferably consists of, two or more surface-treatment agents. For example, the at least one surface-treatment agent comprises, preferably consists of, one surface-treatment agent.

In one embodiment, the natural ground calcium carbonate (GCC) is treated with at least one surface-treatment agent, preferably one surface-treatment agent, selected from the group consisting of
I) a phosphoric acid ester blend of one or more phosphoric acid mono ester and/or salts thereof and/or one or more phosphoric acid di-ester and/or salts thereof, and/or
II) at least one saturated or unsaturated aliphatic linear or branched carboxylic acid and/or salts thereof, preferably at least one aliphatic carboxylic acid having a total amount of carbon atoms from C4 to C24 and/or a salt thereof, more preferably at least one aliphatic carboxylic acid having a total amount of carbon atoms from C12 to C20 and/or a salt thereof, most preferably at least one aliphatic carboxylic acid having a total amount of carbon atoms from C16 to C18 and/or a salt thereof and/or
III) at least one mono-substituted succinic anhydride consisting of succinic anhydride mono-substituted with a group selected from a linear, branched, aliphatic and cyclic group having a total amount of carbon atoms from at least C2 to C30 in the substituent and/or salts thereof, and/or
IV) at least one polydialkylsiloxane, and/or
V) mixtures of one or more materials according to I) to IV).

According to one embodiment of the present invention, the natural ground calcium carbonate (GCC) is treated with at least one surface-treatment agent, which is a phosphoric acid ester blend of one or more phosphoric acid mono-ester and/or salts thereof and/or one or more phosphoric acid di-ester and/or salts thereof.

In one embodiment of the present invention, the one or more phosphoric acid mono-ester consists of an o-phosphoric acid molecule esterified with one alcohol selected from saturated, branched or linear, aliphatic or aromatic alcohols having a total amount of carbon atoms from C6 to C30 in the alcohol substituent. For example, the one or more phosphoric acid mono-ester consists of an o-phosphoric acid molecule esterified with one alcohol selected from saturated, branched or linear, aliphatic or aromatic alcohols having a total amount of carbon atoms from C8 to C22, more preferably from C8 to C20 and most preferably from C8 to C18 in the alcohol substituent.

Alkyl esters of phosphoric acid are well known in the industry especially as surfactants, lubricants and antistatic agents (Die Tenside; Kosswig und Stache, Carl Hanser Verlag München, 1993).

The synthesis of alkyl esters of phosphoric acid by different methods and the surface treatment of minerals with alkyl esters of phosphoric acid are well known by the skilled person, e.g. from Pesticide Formulations and Application Systems: 17th Volume; Collins HM, Hall FR, Hopkinson M, STP1268; Published: 1996, US 3,897,519 A, US 4,921,990 A, US 4,350,645 A, US 6,710,199 B2, US 4,126,650 A, US 5,554,781 A, EP 1092000 B1 and WO 2008/023076 A1.

In one embodiment of the present invention, the one or more phosphoric acid mono-ester consists of an o-phosphoric acid molecule esterified with one alcohol selected from saturated and linear or branched and aliphatic alcohols having a total amount of carbon atoms from C₆ to C₃₀ in the alcohol substituent. For example, the one or more phosphoric acid mono-ester consists of an o-phosphoric acid molecule esterified with one alcohol selected from saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester consists of an o-phosphoric acid molecule esterified with one alcohol selected from saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid mono-ester consists of an o-phosphoric acid molecule esterified with one alcohol selected from saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid mono-ester is selected from the group comprising hexyl phosphoric acid mono-ester, heptyl phosphoric acid mono-ester, octyl phosphoric acid mono-ester, 2-ethylhexyl phosphoric acid mono-ester, nonyl phosphoric acid mono-ester, decyl phosphoric acid mono-ester, undecyl phosphoric acid mono-ester, dodecyl phosphoric acid mono-ester, tetradecyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof.

For example, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof. In one embodiment of the present invention, the one or more phosphoric acid mono-ester is 2-octyl-1-dodecylphosphoric acid mono-ester.

It is appreciated that the expression "one or more" phosphoric acid di-ester means that one or more kinds of phosphoric acid di-ester may be present in the treatment layer of the surface-treated material product and/or the phosphoric acid ester blend.

Accordingly, it should be noted that the one or more phosphoric acid di-ester may be one kind of phosphoric acid di-ester. Alternatively, the one or more phosphoric acid di-ester may be a mixture of two or more kinds of phosphoric acid di-ester. For example, the one or more phosphoric acid di-ester may be a mixture of two or three kinds of phosphoric acid di-ester, like two kinds of phosphoric acid di-ester.

In one embodiment of the present invention, the one or more phosphoric acid di-ester consists of an o-phosphoric acid molecule esterified with two alcohols selected from saturated, branched or linear, aliphatic or aromatic alcohols having a total amount of carbon atoms from C6 to C30 in the alcohol substituent. For example, the one or more phosphoric acid di-ester consists of an o-phosphoric acid molecule esterified with two fatty alcohols selected from saturated, branched or linear, aliphatic or aromatic alcohols having a total amount of carbon atoms from C8 to C22, more preferably from C8 to C20 and most preferably from C8 to C18 in the alcohol substituent.

It is appreciated that the two alcohols used for esterifying the phosphoric acid may be independently selected from the same or different saturated, branched or linear, aliphatic or aromatic alcohols having a total amount of carbon atoms from C6 to C30 in the alcohol substituent. In other words, the one or more phosphoric acid di-ester may comprise two substituents being derived from the same alcohols or the phosphoric acid di-ester molecule may comprise two substituents being derived from different alcohols.

In one embodiment of the present invention, the one or more phosphoric acid di-ester consists of an o-phosphoric acid molecule esterified with two alcohols selected from the same or different, saturated and linear or branched and aliphatic alcohols having a total amount of carbon atoms from C6 to C30 in the alcohol substituent. For example, the one or more phosphoric acid di-ester consists of an o-phosphoric acid molecule esterified with two alcohols selected from the same or different, saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid di-ester consists of an o-phosphoric acid molecule esterified with two alcohols selected from the same or different, saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid di-ester consists of an o-phosphoric acid molecule esterified with two alcohols selected from the same or different, saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid di-ester is selected from the group comprising hexyl phosphoric acid di-ester, heptyl phosphoric acid di-ester, octyl phosphoric acid di-ester, 2-ethylhexyl phosphoric acid di-ester, nonyl phosphoric acid di-ester, decyl phosphoric acid di-ester, undecyl phosphoric acid di-ester, dodecyl phosphoric acid di-ester, tetradecyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof. In one embodiment of the present invention, the one or more phosphoric acid di-ester is 2-octyl-1-dodecylphosphoric acid di-ester.

In one embodiment of the present invention, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof and the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

According to another embodiment of the present invention, the natural ground calcium carbonate (GCC) is treated with at least one surface-treatment agent, which is at least one saturated or unsaturated aliphatic linear or branched carboxylic acid and/or salts thereof preferably at least one aliphatic carboxylic acid having a total amount of carbon atoms from C4 to C24 and/or a salt thereof, more preferably at least one aliphatic carboxylic acid having a total amount of carbon atoms from C12 to C20 and/or a salt thereof, most preferably at least one aliphatic carboxylic acid having a total amount of carbon atoms from C16 to C18 and/or a salt thereof.

The carboxylic acid in the meaning of the present invention may be selected from one or more linear chain, branched chain, saturated, or unsaturated and/or alicyclic carboxylic acids. Preferably, the aliphatic carboxylic acid is a monocarboxylic acid, i.e. the aliphatic carboxylic acid is characterized in that a single carboxyl group is present. Said carboxyl group is placed at the end of the carbon skeleton.

In one embodiment of the present invention, the aliphatic linear or branched carboxylic acid and/or salt thereof is selected from saturated unbranched carboxylic acids, preferably selected from the group of carboxylic acids consisting of pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosylic acid, behenic acid, tricosylic acid, lignoceric acid, their salts, their anhydrides and mixtures thereof.

In another embodiment of the present invention, the aliphatic linear or branched carboxylic acid and/or salt thereof is selected from the group consisting of octanoic acid, decanoic acid, lauric acid, myristic acid, palmitic acid, stearic acid, arachidic acid and mixtures thereof. Preferably, the aliphatic carboxylic acid is selected from the group consisting of myristic acid, palmitic acid, stearic acid, their salts, their anhydrides and mixtures thereof.

Preferably, the aliphatic carboxylic acid and/or a salt or anhydride thereof is stearic acid and/or a stearic acid salt or stearic anhydride.

Alternatively, the unsaturated aliphatic linear or branched carboxylic acid is preferably selected from the group consisting of myristoleic acid, palmitoleic acid, sapienic acid, oleic acid, elaidic acid, vaccenic acid, linoleic acid, α-linolenic acid, eicosapentaenoic acid, docosahexaenoic acid and mixtures thereof. More preferably, the unsaturated aliphatic linear or branched carboxylic acid selected from the group consisting of myristoleic acid, palmitoleic acid, sapienic acid, oleic acid, elaidic acid, vaccenic acid, linoleic acid, α-linolenic acid and mixtures thereof. Most preferably, the unsaturated aliphatic linear or branched carboxylic acid is oleic acid and/or linoleic acid, preferably oleic acid or linoleic acid, most preferably linoleic acid.

Additionally or alternatively, the surface-treatment agent is a salt of an unsaturated aliphatic linear or branched carboxylic acid.

The term "salt of an unsaturated aliphatic linear or branched carboxylic acid" refers to an unsaturated fatty acid, wherein the active acid group is partially or completely neutralized. The term "partially neutralized" unsaturated aliphatic linear or branched carboxylic acid refers to a degree of neutralization of the active acid groups in the range from 40 and 95 mole-% preferably from 50 to 95 mole-%, more preferably from 60 to 95 mole-% and most preferably from 70 to 95 mole-%. The term "completely neutralized" unsaturated aliphatic linear or branched carboxylic acid refers to a degree of neutralization of the active acid groups of > 95 mole-%, preferably of > 99 mole-%, more preferably of > 99.8 mole-% and most preferably of 100 mole-%. Preferably, the active acid groups are partially or completely neutralized.

The salt of unsaturated aliphatic linear or branched carboxylic acid is preferably a compound selected from the group consisting of sodium, potassium, calcium, magnesium, lithium, strontium, primary amine, secondary amine, tertiary amine and/or ammonium salts thereof, whereby the amine salts are linear or cyclic. For example, the unsaturated aliphatic linear or branched carboxylic acid is a salt of oleic acid and/or linoleic acid, preferably oleic acid or linoleic acid, most preferably linoleic acid.

According to another embodiment of the present invention, the natural ground calcium carbonate (GCC) is treated with at least one surface-treatment agent, which is at least one mono-substituted succinic anhydride consisting of succinic anhydride mono-substituted with a group selected from a linear, branched, aliphatic and cyclic group having a total amount of carbon atoms from at least C2 to C30 in the substituent and/or salts thereof. Preferably, the natural ground calcium carbonate (GCC) is treated with at least one surface-treatment agent, which is at least one mono-substituted succinic anhydride consisting of succinic anhydride mono-substituted with a group being a linear aliphatic group having a total amount of carbon atoms from at least C2 to C30 in the substituent and/or salts thereof. Additionally or alternatively, the natural ground calcium carbonate (GCC) is treated with at least one surface-treatment agent, which is at least one mono-substituted succinic anhydride consisting of succinic anhydride mono-substituted with a group being a branched aliphatic group having a total amount of carbon atoms from at least C3 to C30 in the substituent and/or salts thereof. Additionally or alternatively, the natural ground calcium carbonate (GCC) is treated with at least one surface-treatment agent, which is at least one mono-substituted succinic anhydride consisting of succinic anhydride mono-substituted with a group being a cyclic aliphatic group having a total amount of carbon atoms from at least C5 to C30 in the substituent and/or salts thereof.

Accordingly, it should be noted that the at least one mono-substituted succinic anhydride may be one kind of mono-substituted succinic anhydride. Alternatively, the at least one mono-substituted succinic anhydride may be a mixture of two or more kinds of mono-substituted succinic anhydride. For example, the at least one mono-substituted succinic anhydride may be a mixture of two or three kinds of mono-substituted succinic anhydride, like two kinds of mono-substituted succinic anhydride.

In one embodiment of the present invention, the at least one mono-substituted succinic anhydride is one kind of mono-substituted succinic anhydride.

It is appreciated that the at least one mono-substituted succinic anhydride represents a surface treatment agent and consists of succinic anhydride mono-substituted with a group selected from any linear, branched, aliphatic, and cyclic group having a total amount of carbon atoms from C2 to C30 in the substituent.

In one embodiment of the present invention, the at least one mono-substituted succinic anhydride consists of succinic anhydride mono-substituted with a group selected from a linear, branched, aliphatic, and cyclic group having a total amount of carbon atoms from C3 to C20 in the substituent. For example, the at least one mono-substituted succinic anhydride consists of succinic anhydride mono-substituted with a group selected from a linear, branched, aliphatic, and cyclic group having a total amount of carbon atoms from C4 to C18 in the substituent. Preferably. the surface-treatment composition comprises a further surface-treatment agent, which is at least one mono-substituted succinic anhydride consisting of succinic anhydride mono-substituted with a group being a linear aliphatic group having a total amount of carbon atoms from C3 to C20, more preferably from C4 to C18, in the substituent and/or salts thereof. Additionally or alternatively, the surface-treatment composition comprises a further surface-treatment agent, which is at least one mono-substituted succinic anhydride consisting of succinic anhydride mono-substituted with a group being a branched aliphatic group having a total amount of carbon atoms from C3 to C20, more preferably from C4 to C18, in the substituent and/or salts thereof. Additionally or alternatively, the surface-treatment composition comprises a further surface-treatment agent, which is at least one mono-substituted succinic anhydride consisting of succinic anhydride mono-substituted with a group being a cyclic aliphatic group having a total amount of carbon atoms from C5 to C20, more preferably from C5 to C18in the substituent and/or salts thereof.

In one embodiment of the present invention, the at least one mono-substituted succinic anhydride consists of succinic anhydride mono-substituted with one group being a linear and aliphatic group having a total amount of carbon atoms from C2 to C30, preferably from C3 to C20 and most preferably from C4 to C18 in the substituent. Additionally or alternatively, the at least one mono-substituted succinic anhydride consists of succinic anhydride mono-substituted with one group being a branched and aliphatic group having a total amount of carbon atoms from C3 to C30, preferably from C3 to C20 and most preferably from C4 to C18 in the substituent.

Thus, it is preferred that the at least one mono-substituted succinic anhydride consists of succinic anhydride mono-substituted with one group being a linear alkyl group having a total amount of carbon atoms from C2 to C30, preferably from C3 to C20 and most preferably from C4 to C18 in the substituent. Additionally or alternatively, it is preferred that the at least one mono-substituted succinic anhydride consists of succinic anhydride mono-substituted with one group being a branched alkyl group having a total amount of carbon atoms from C3 to C30, preferably from C3 to C20 and most preferably from C4 to C18 in the substituent.

For example, the at least one mono-substituted succinic anhydride consists of succinic anhydride mono-substituted with one group being a linear alkyl group having a total amount of carbon atoms from C2 to C30, preferably from C3 to C20 and most preferably from C4 to C18 in the substituent. Additionally or alternatively, the at least one mono-substituted succinic anhydride consists of succinic anhydride mono-substituted with one group being a branched alkyl group having a total amount of carbon atoms from C3 to C30, preferably from C3 to C20 and most preferably from C4 to C18 in the substituent.

In one embodiment of the present invention, the at least one mono-substituted succinic anhydride is at least one linear or branched alkyl mono-substituted succinic anhydride. For example, the at least one alkyl mono-substituted succinic anhydride is selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof.

Accordingly, it is appreciated that, e.g., the term "butylsuccinic anhydride" comprises linear and branched butylsuccinic anhydride(s). One specific example of linear butylsuccinic anhydride(s) is n-butylsuccinic anhydride. Specific examples of branched butylsuccinic anhydride(s) are iso-butylsuccinic anhydride, sec-butylsuccinic anhydride and/or tert-butylsuccinic anhydride.

Furthermore, it is appreciated that, e.g., the term "hexadecanyl succinic anhydride" comprises linear and branched hexadecanyl succinic anhydride(s). One specific example of linear hexadecanyl succinic anhydride(s) is n-hexadecanyl succinic anhydride. Specific examples of branched hexadecanyl succinic anhydride(s) are 14-methylpentadecanyl succinic anhydride, 13-methylpentadecanyl succinic anhydride, 12-methylpentadecanyl succinic anhydride, 11-methylpentadecanyl succinic anhydride, 10-methylpentadecanyl succinic anhydride, 9-methylpentadecanyl succinic anhydride, 8-methylpentadecanyl succinic anhydride, 7-methylpentadecanyl succinic anhydride, 6-methylpentadecanyl succinic anhydride, 5-methylpentadecanyl succinic anhydride, 4-methylpentadecanyl succinic anhydride, 3-methylpentadecanyl succinic anhydride, 2-methylpentadecanyl succinic anhydride, 1-methylpentadecanyl succinic anhydride, 13-ethylbutadecanyl succinic anhydride, 12-ethylbutadecanyl succinic anhydride, 11-ethylbutadecanyl succinic anhydride, 10-ethylbutadecanyl succinic anhydride, 9-ethylbutadecanyl succinic anhydride, 8-ethylbutadecanyl succinic anhydride, 7-ethylbutadecanyl succinic anhydride, 6-ethylbutadecanyl succinic anhydride, 5-ethylbutadecanyl succinic anhydride, 4-ethylbutadecanyl succinic anhydride, 3-ethylbutadecanyl succinic anhydride, 2-ethylbutadecanyl succinic anhydride, 1-ethylbutadecanyl succinic anhydride, 2-butyldodecanyl succinic anhydride, 1-hexyldecanyl succinic anhydride, 1-hexyl-2-decanyl succinic anhydride, 2-hexyldecanyl succinic anhydride, 6,12-dimethylbutadecanyl succinic anhydride, 2,2-diethyldodecanyl succinic anhydride, 4,8,12-trimethyltridecanyl succinic anhydride, 2,2,4,6,8-pentamethylundecanyl succinic anhydride, 2-ethyl-4-methyl-2-(2-methylpentyl)-heptyl succinic anhydride and/or 2-ethyl-4,6-dimethyl-2-propylnonyl succinic anhydride.

Furthermore, it is appreciated that e.g. the term "octadecanyl succinic anhydride" comprises linear and branched octadecanyl succinic anhydride(s). One specific example of linear octadecanyl succinic anhydride(s) is n-octadecanyl succinic anhydride. Specific examples of branched hexadecanyl succinic anhydride(s) are 16-methylheptadecanyl succinic anhydride, 15-methylheptadecanyl succinic anhydride, 14-methylheptadecanyl succinic anhydride, 13-methylheptadecanyl succinic anhydride, 12-methylheptadecanyl succinic anhydride, 11-methylheptadecanyl succinic anhydride, 10-methylheptadecanyl succinic anhydride, 9-methylheptadecanyl succinic anhydride, 8-methylheptadecanyl succinic anhydride, 7-methylheptadecanyl succinic anhydride, 6-methylheptadecanyl succinic anhydride, 5-methylheptadecanyl succinic anhydride, 4-methylheptadecanyl succinic anhydride, 3-methylheptadecanyl succinic anhydride, 2-methylheptadecanyl succinic anhydride, 1-methylheptadecanyl succinic anhydride, 14-ethylhexadecanyl succinic anhydride, 13-ethylhexadecanyl succinic anhydride, 12-ethylhexadecanyl succinic anhydride, 11-ethylhexadecanyl succinic anhydride, 10-ethylhexadecanyl succinic anhydride, 9-ethylhexadecanyl succinic anhydride, 8-ethylhexadecanyl succinic anhydride, 7-ethylhexadecanyl succinic anhydride, 6-ethylhexadecanyl succinic anhydride, 5-ethylhexadecanyl succinic anhydride, 4-ethylhexadecanyl succinic anhydride, 3-ethylhexadecanyl succinic anhydride, 2-ethylhexadecanyl succinic anhydride, 1-ethylhexadecanyl succinic anhydride, 2-hexyldodecanyl succinic anhydride, 2-heptylundecanyl succinic anhydride, iso-octadecanyl succinic anhydride and/or 1-octyl-2-decanyl succinic anhydride.

In one embodiment of the present invention, the at least one alkyl mono-substituted succinic anhydride is selected from the group comprising butylsuccinic anhydride, hexylsuccinic anhydride, heptylsuccinic anhydride, octylsuccinic anhydride, hexadecanyl succinic anhydride, octadecanyl succinic anhydride, and mixtures thereof.

In one embodiment of the present invention, the at least one mono-substituted succinic anhydride is one kind of alkyl mono-substituted succinic anhydride. For example, the one alkyl mono-substituted succinic anhydride is butylsuccinic anhydride. Alternatively, the one alkyl mono-substituted succinic anhydride is hexylsuccinic anhydride. Alternatively, the one alkyl mono-substituted succinic anhydride is heptylsuccinic anhydride or octylsuccinic anhydride. Alternatively, the one alkyl mono-substituted succinic anhydride is hexadecanyl succinic anhydride. For example, the one alkyl mono-substituted succinic anhydride is linear hexadecanyl succinic anhydride such as n-hexadecanyl succinic anhydride or branched hexadecanyl succinic anhydride such as 1-hexyl-2-decanyl succinic anhydride. Alternatively, the one alkyl mono-substituted succinic anhydride is octadecanyl succinic anhydride. For example, the one alkyl mono-substituted succinic anhydride is linear octadecanyl succinic anhydride such as n-octadecanyl succinic anhydride or branched octadecanyl succinic anhydride such as iso-octadecanyl succinic anhydride or 1-octyl-2-decanyl succinic anhydride.

In one embodiment of the present invention, the one alkyl mono-substituted succinic anhydride is butylsuccinic anhydride such as n-butylsuccinic anhydride.

In one embodiment of the present invention, the at least one mono-substituted succinic anhydride is a mixture of two or more kinds of alkyl mono-substituted succinic anhydrides. For example, the at least one mono-substituted succinic anhydride is a mixture of two or three kinds of alkyl mono-substituted succinic anhydrides.

According to another embodiment of the present invention, the natural ground calcium carbonate (GCC) is treated with at least one surface-treatment agent, which is at least one polydialkylsiloxane.

Preferred polydialkylsiloxanes are described e.g. in US 2004/0097616 A1. Most preferred are polydialkylsiloxanes selected from the group consisting of polydimethylsiloxane, preferably dimethicone, polydiethylsiloxane and polymethylphenylsiloxane and/or mixtures thereof.

For example, the at least one polydialkylsiloxane is preferably a polydimethylsiloxane (PDMS).

The surface-treated natural ground calcium carbonate (GCC) of the present invention is preferably formed in that the natural ground calcium carbonate (GCC) is contacted with the at least one surface-treatment agent such that a treatment layer comprising the at least one surface-treatment agent and/or salty reaction products thereof is formed on the surface of the natural ground calcium carbonate (GCC).

The natural ground calcium carbonate (GCC) is contacted with the surface-treatment agent preferably in an amount from 0.3 to 10 mg / m² of the calcium or magnesium carbonate-comprising material surface, preferably 0.5 to 8 mg / m², more preferably 0.8 to 3 mg / m². For example, the natural ground calcium carbonate (GCC) is contacted with the surface-treatment agent preferably in an amount from 0.8 to 2.8 mg / m² or from 0.8 to 2.6 mg / m² of the calcium or magnesium carbonate-comprising material surface.

Preferably, the at least one surface-treatment agent is present on the natural ground calcium carbonate (GCC) in an amount ranging from 0.5 to 4.5 wt.-% based on the total weight of the natural ground calcium carbonate (GCC). That is, a chemical reaction may take place between the natural ground calcium carbonate (GCC) and the surface treatment agent. In other words, the treatment layer may comprise the surface treatment agent and/or salty reaction products thereof.

The term "salty reaction products" of the further surface-treatment agent refers to products obtained by contacting the natural ground calcium carbonate (GCC) with the surface-treatment agent. Said reaction products are formed between at least a part of the applied surface-treatment agent and reactive molecules located at the surface of the natural ground calcium carbonate (GCC).

Thus, the natural ground calcium carbonate (GCC) of the present invention is preferably a surface-treated (e.g. stearic acid treated) natural ground calcium carbonate (GCC) having
i) a weight median particle size *d*₅₀ value measured by the sedimentation method of ≤ 0.8 µm, and
ii) a specific surface area (BET) of at least 10 m²/g as measured using nitrogen and the BET method according to ISO 9277:2010, and
iii) a residual moisture content of ≤ 0.2 wt.-%, based on the total dry weight of the natural ground calcium carbonate (GCC).

In one embodiment, the natural ground calcium carbonate (GCC) is a surface-treated (e.g. stearic acid treated) natural ground calcium carbonate (GCC) having
i) a weight median particle size *d*₅₀ value measured by the sedimentation method of ≤ 0.8 µm, preferably of ≤ 0.6 µm, more preferably of ≤ 0.4 µm, even more preferably in the range from 0.1 µm to 0.4 µm and most preferably in the range from 0.2 µm to 0.4 µm, and
ii) a specific surface area (BET) of at least 10 m²/g as measured using nitrogen and the BET method according to ISO 9277:2010, and
iii) a residual moisture content of ≤ 0.2 wt.-%, based on the total dry weight of the natural ground calcium carbonate (GCC).

In another embodiment, the natural ground calcium carbonate (GCC) is a surface-treated (e.g. stearic acid treated) natural ground calcium carbonate (GCC) having
i) a weight median particle size *d*₅₀ value measured by the sedimentation method of ≤ 0.8 µm, and
ii) a specific surface area (BET) of at least 10 m²/g as measured using nitrogen and the BET method according to ISO 9277:2010, preferably from 10 to 40 m²/g, more preferably from 10 to 32 m²/g, even more preferably from 12 to 28 m²/g and most preferably from 12 to 25 m²/g, and
iii) a residual moisture content of ≤ 0.2 wt.-%, based on the total dry weight of the natural ground calcium carbonate (GCC).
   In another embodiment, the natural ground calcium carbonate (GCC) is a surface-treated (e.g. stearic acid treated) natural ground calcium carbonate (GCC) having
iv) a weight median particle size *d*₅₀ value measured by the sedimentation method of ≤ 0.8 µm, and
v) a specific surface area (BET) of at least 10 m²/g as measured using nitrogen and the BET method according to ISO 9277:2010, and
vi) a residual moisture content of ≤ 0.2 wt.-%, e.g. from 0.03 to ≤ 0.2 wt.-%, preferably of ≤ 0.15 wt.-%, e.g. from 0.05 to ≤ 0.15 wt.-%, and most preferably of ≤ 0.1 wt.-%, e.g. from 0.05 to ≤ 0.1 wt.-%, based on the total dry weight of the natural ground calcium carbonate (GCC).

In a preferred embodiment, the natural ground calcium carbonate (GCC) is a surface-treated (e.g. stearic acid treated) natural ground calcium carbonate (GCC) having
i) a weight median particle size *d*₅₀ value measured by the sedimentation method of ≤ 0.8 µm, more preferably of ≤ 0.4 µm, even more preferably in the range from 0.1 µm to 0.4 µm and most preferably in the range from 0.2 µm to 0.4 µm, and
ii) a specific surface area (BET) of at least 10 m²/g as measured using nitrogen and the BET method according to ISO 9277:2010, preferably from 10 to 40 m²/g, more preferably from 10 to 32 m²/g, even more preferably from 12 to 28 m²/g and most preferably from 12 to 25 m²/g, and
iii) a residual moisture content of ≤ 0.2 wt.-%, e.g. from 0.03 to ≤ 0.2 wt.-%, preferably of ≤ 0.15 wt.-%, e.g. from 0.05 to ≤ 0.15 wt.-%, and most preferably of ≤ 0.1 wt.-%, e.g. from 0.05 to ≤ 0.1 wt.-%, based on the total dry weight of the natural ground calcium carbonate (GCC).

For example, the natural ground calcium carbonate (GCC) is a surface-treated (e.g. stearic acid treated) natural ground calcium carbonate (GCC) having
i) a weight median particle size *d*₅₀ value measured by the sedimentation method in the range from 0.2 µm to 0.4 µm, and
ii) a specific surface area (BET) as measured using nitrogen and the BET method according to ISO 9277:2010in the range from 12 to 25 m²/g, and
iii) a residual moisture content ranging from 0.07 to ≤ 0.1 wt.-%, based on the total dry weight of the natural ground calcium carbonate (GCC).

Additionally, the surface-treated (e.g. stearic acid treated) natural ground calcium carbonate (GCC) may have a top cut (*d*₉₈) measured by the sedimentation method of 0.3 to 3.0 µm, more preferably of 0.5 to 2.0 µm, and most preferably of 0.5 to 1.5 µm.

In one embodiment, the natural ground calcium carbonate (GCC) is a surface-treated (e.g. stearic acid treated) natural ground calcium carbonate (GCC) having
i) a weight median particle size *d*₅₀ value measured by the sedimentation method of ≤ 0.8 µm, more preferably of ≤ 0.4 µm, even more preferably in the range from 0.1 µm to 0.4 µm and most preferably in the range from 0.2 µm to 0.4 µm, and
ii) a specific surface area (BET) of at least 10 m²/g as measured using nitrogen and the BET method according to ISO 9277:2010, preferably from 10 to 40 m²/g, more preferably from 10 to 32 m²/g, even more preferably from 12 to 28 m²/g and most preferably from 12 to 25 m²/g, and
iii) a residual moisture content of ≤ 0.2 wt.-%, e.g. from 0.03 to ≤ 0.2 wt.-%, preferably of ≤ 0.15 wt.-%, e.g. from 0.05 to ≤ 0.15 wt.-%, and most preferably of ≤ 0.1 wt.-%, e.g. from 0.05 to ≤ 0.1 wt.-%, based on the total dry weight of the natural ground calcium carbonate (GCC), and
iv) a top cut (*d*₉₈) measured by the sedimentation method of 0.3 to 3.0 µm, more preferably of 0.5 to 2.0 µm, and most preferably of 0.5 to 1.5 µm.

Another component of the moisture-curing one-component polymer composition is a polymer material.

It is appreciated that the polymer material (or polymerisable material) of the present moisture-curing one-component polymer composition is curable by moisture and thus produces through moisture (or water) reaction a highly crosslinked material with a softening temperature well above room temperature. Thus, the polymer material is preferably a moisture-curing polymer material.

Preferably, the moisture-curing one-component polymer composition of the present invention is cured at a temperature and humidity typically applied for the products to be prepared. For example, the moisture-curing one-component polymer composition of the present invention is cured at a temperature ranging from 5 to 100°C, preferably from 5 to 80°C or 5 to 60°C. For example, the moisture-curing one-component polymer composition of the present invention is cured at a temperature ranging from 5 to 35°C.Additionally or alternatively, the moisture-curing one-component polymer composition of the present invention is cured at a humidity ranging from 20 % to below condensation (i.e. about 90 %). For example, the moisture-curing one-component polymer composition of the present invention is cured at a humidity ranging from 30 % to below condensation (i.e. about 90 %).

In one embodiment, the moisture-curing one-component polymer composition of the present invention is cured at a temperature ranging from 5 to 35°C and at a humidity ranging from 30 % to below condensation (i.e. about 90 %).

A wide variety of moisture-curing polymer materials are known.

One group of moisture-curing polymer materials that can be used for the present invention includes polyurethane (PU), which is formed by the reaction of various types of isocyanates such as di-, tri- or polyisocyanates and alcohols (i.e., diols, triols, polyols). The corresponding "hard phase" is born from the di-, tri- or polyisocyanates that through water reaction produce a highly crosslinked material with softening temperature well above room temperature.

The isocyanate can be preferably selected from aromatic diisocyanates such as toluene diisocyanate (TDI) and methylene diphenyl diisocyanate (MDI), and aliphatic and cycloaliphatic isocyanates such as 1,6-hexamethylene diisocyanate (HDI), 1-isocyanato-3-isocyanatomethyl-3,5,5-trimethyl-cyclohexane (isophorone diisocyanate, IPDI), and 4,4'-diisocyanato dicyclohexylmethane, (HMDI or hydrogenated MDI). The polyol and/or polyamine preferably comprises polyetherester polyol, fatty acid ester polyols, poly ether polyols, polyester polyols, polybutadiene polyols and polycarbonate polyols, and may also comprise mixtures of these compounds. The polyol and/or polyamine contains preferably between two and 10, more preferably between two and three hydroxyl groups and/or amino groups, and possess a weight-average molecular weight of between 32 and 30 000, more preferably between 90 and 18 000 g/mol. Suitable polyols are preferably the polyhydroxy compounds that at room temperature are liquids, glasslike solids/amorphous compounds or crystalline compounds. Typical examples might include difunctional polypropylene glycols. It is also possible for preferably hydroxyl-containing random copolymers and/ or block copolymers of ethylene oxide and propylene oxide to be used. Suitable polyether polyols are the polyethers known per se in polyurethane chemistry, such as the polyols prepared, using starter molecules, by means of KOH catalysis or DMC catalysis, from styrene oxide, ethylene oxide, propylene oxide, butylene oxide, tetrahydrofuran or epichlorohydrin.

Another group of moisture-curing polymer materials that can be used for the present invention includes silyl-modified polyurethane, preferably polyurethanes provided with terminal silane groups.

Another group of moisture-curing polymer materials that can be used for the present invention includes polyurea, which is formed by the reaction of various types of isocyanates such as di-, tri- or polyisocyanates and amines (e.g. polyamines).

Another group of moisture-curing polymer materials that can be used for the present invention includes silyl-modified polyurea, preferably polyurea provided with terminal silane groups

Another group of moisture-curing polymer materials that can be used for the present invention includes silicone.

Another group of moisture-curing polymer materials that can be used for the present invention includes polyether polymers with terminal silane groups.

Another group of moisture-curing polymer materials that can be used for the present invention includes polysulfide polymers with terminal silane groups.

Another group of moisture-curing polymer materials that can be used for the present invention includes poly(meth)acrylate. Examples of poly(meth)acrylates include, for example, polymethylmethacrylate, polyacrylonitrile, polyacrylamide or polybutylacrylate.

Thus, the polymer material is preferably selected from the group comprising polyurethane, silyl-modified polyurethane, polyurea, silyl-modified polyurea, silicone, polyether polymers with terminal silane groups, polysulfide polymers with terminal silane groups, poly(meth)acrylate, and mixtures thereof. For example, the polymer material is preferably selected from the group comprising polyurethane, silyl-modified polyurethane, silicone or poly(meth)acrylate.

Preferably, the polymer material is polyurethane or silyl-modified polyurethane. More preferably, the polymer material is polyurethane.

Specific examples of polymer materials that may be used for the present invention include but are not limited to Geniosil^{®} STP-E10 (available from Wacker); Geniosil^{®} STP-E30 (available from Wacker); SPUR+^{®} 1050MM (available from Momentive); SPUR+^{®}Y-19116 (available from Momentive); Desmoseal^{®} S XP 2636 (available from Bayer); Desmoseal^{®} M 280 (available from Bayer); MS Polymer^{™} S303H (available from Kaneka) and MS Polymer^{™} S227 (available from Kaneka). The structures and characteristics of these polymer materials are described in more detail in US20200095377 A1, which is thus included herewith by reference.

In one embodiment, the polymer composition preferably comprises the natural ground calcium carbonate (GCC), e.g. the (stearic acid) surface treated natural ground calcium carbonate (GCC), in an amount ranging from 20 to 65 wt.-%, based on the total weight of the polymer composition, preferably from 30 to 60 wt.-%, more preferably from 35 to 55 wt.-% and most preferably from 35 to 50 wt.-%.

For example, the polymer composition comprises the natural ground calcium carbonate (GCC), e.g. the (stearic acid) surface treated natural ground calcium carbonate (GCC), in an amount ranging from 20 to 65 wt.-%, based on the total weight of the polymer composition, preferably from 30 to 60 wt.-%, more preferably from 35 to 55 wt.-% and most preferably from 35 to 50 wt.-% and the polymer material in an amount ranging from 35 to 80 wt.-%, based on the total weight of the polymer composition, preferably from 40 to 70 wt.-%, more preferably from 45 to 65 wt.-% and most preferably from 50 to 65 wt.-%.

It is appreciated that the moisture-curing one-component polymer composition typically further comprises a crosslinking agent and plasticizer as additives. Crosslinking agents and plasticizer for moisture-curing one-component polymer compositions are well known in the art. The crosslinking agent and plasticizer are not particularly limited, but the skilled person will select the crosslinking agent and plasticizer in accordance with the polymer material of the moisture-curing one-component polymer composition.

The moisture-curing one-component polymer composition may optionally comprise further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin. Such additives are well known in the art and will be selected accordingly by the skilled person.

In one embodiment, the moisture-curing one-component polymer composition preferably comprises the crosslinking agent and plasticizer as additives and the optional further additives in an amount ranging from 0.1 to 25 wt.-%, based on the total weight of the polymer composition, preferably from 0.5 to 23 wt.-%, more preferably from 1 to 20 wt.-% and most preferably from 1.2 to 18 wt.-%. It is appreciated that the amount of the crosslinking agent and plasticizer as additives and the optional further additives refers to the total amount of these additives.

For example, the moisture-curing one-component polymer composition comprises, preferably consists of,
a) the natural ground calcium carbonate (GCC), e.g. the (stearic acid) surface treated natural ground calcium carbonate (GCC), in an amount ranging from 20 to 65 wt.-%, based on the total weight of the polymer composition, preferably from 30 to 60 wt.-%, more preferably from 35 to 55 wt.-% and most preferably from 35 to 50 wt.-%,
b) the polymer material in an amount ranging from 10 to 79.9 wt.-%, based on the total weight of the polymer composition, preferably from 17 to 65.5 wt.-%, more preferably from 25 to 64 wt.-% and most preferably from 32 to 63.8 wt.-%, and
c) the crosslinking agent and plasticizer as additives and the optional further additives in an amount ranging from 0.1 to 25 wt.-%, based on the total weight of the polymer composition, preferably from 0.5 to 23 wt.-%, more preferably from 1 to 20 wt.-% and most preferably from 1.2 to 18 wt.-%.

The moisture-curing one-component polymer composition is preferably used for the preparation of adhesives and sealants. Thus, the moisture-curing one-component polymer composition is preferably a sealant or adhesive composition.

### Process for the preparation of the moisture-curing one-component polymer composition

According to one aspect of the present invention, the moisture-curing one-component polymer composition of the present invention is prepared by a process comprising the following steps:
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d) in any order.

As regards the polymer material, the natural ground calcium carbonate (GCC), the crosslinking agent and the plasticizer, the optional further additives and preferred embodiments thereof, reference is made to the comments provided above when discussing the moisture-curing one-component polymer composition in detail.

It is appreciated that the polymer material in step a) is preferably provided in dry form. Additionally or alternatively, the natural ground calcium carbonate (GCC) in step b) is preferably provided in dry form. Additionally or alternatively, the crosslinking agent and the plasticizer in step c) as well as the further optional additives in step d), if present, are preferably provided in dry form.

In a preferred embodiment, the polymer material in step a) is provided in dry form, the natural ground calcium carbonate (GCC) in step b) is provided in dry form, and the crosslinking agent and the plasticizer in step c) as well as the further optional additives in step d), if present, are preferably provided in dry form.

In a preferred embodiment, the moisture-curing one-component polymer composition is thus prepared in a dry process. With respect to the process, it is to be noted that the wording "dry form" or "dry process" means that the compounds of step a), step b), step c) and optional step d) are provided without the use of solvent(s) such as water.

It is appreciated that the polymer material of step a) may be in solid, highly viscous or liquid state. Typically, the polymer material of step a) is in highly viscous or liquid state. It is preferred that the polymer material of step a) is provided in liquid state in process step e). Thus, the polymer material of step a) is optionally heated to provide the polymer material in liquid or molten stated, i.e. in a less viscous state. In one embodiment, contacting step e) of the process thus includes a heating of the polymer material of step a). Such a heating is preferably carried out in case the polymer material of step a) is solid or highly viscous. However, even if the polymer material of step a) is in liquid state it may be favourable to carry out a heating in step e) in order to speed up and increase the reaction.

In general, step e) is carried out at a temperature from 5 to 200°C, preferably from 20 to 150°C, and most preferably from 40 to 150°C, e.g. from 50 to 110°C. If the process comprises a heating in step e), step e) is preferably carried out at a temperature from 40 to 150°C, e.g. from 50 to 150°C. It is appreciated that the temperature in step e) is adjusted such that the polymer material is in a liquid or molten state but without thermally decomposing the polymer material.

In one embodiment, the polymer material of step a) is preferably added in dry form and heated (i.e. the polymer material is made less viscous) once in contact with the natural ground calcium carbonate (GCC) of step b). It is also possible that the natural ground calcium carbonate (GCC) is contacted under mixing, in one or more steps, with the polymer material and subsequently heated.

Additionally or alternatively, process step e) is carried out under vacuum.

In one embodiment, process step e) is carried out under vacuum and heating to a temperature from 40 to 150°C, e.g. from 50 to 150°C. In another embodiment, process step e) is carried out under vacuum or heating to a temperature from 40 to 150°C, e.g. from 50 to 150°C, preferably under vacuum.

Carrying out process step e) under heating and/or vacuum has the further advantage that residual moisture that may be present on the natural ground calcium carbonate (GCC) is reduced and thus improves the storage stability of the moisture-curing one-component polymer composition.

Step e) is preferably carried out under mixing. It is appreciated that the mixing can be carried out by any method or in any vessel known to the skilled person resulting in a homogeneous composition. For example, step e) is carried out in a high speed mixer or planetary mixer.

It is appreciated that step e) can be carried out in that the components of step a), step b), step c) and optional step d) are contacted in any order.

In a preferred embodiment, contacting step e) is carried out in that firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent of step c).

It is appreciated that the contacting step e) is preferably carried out in that firstly the natural ground calcium carbonate (GCC) of step b) is contacted under mixing, in one or more steps with the plasticizer of step c). Subsequently, the mixture obtained is preferably contacted under mixing, in one or more steps, with the polymer material of step a) and the crosslinking agent of step c).

The term "one step" means that the respective compound is completely added into the contacting step e). Contrary thereto, "(two or) more steps" are carried out if the respective compound is added in several portions into contacting step e).

Preferably, contacting step e) is carried out in that firstly the natural ground calcium carbonate (GCC) of step b) is contacted under mixing in one step with the plasticizer of step c) and the mixture obtained is contacted under mixing in one step with the polymer material of step a) and the crosslinking agent of step c).

In this embodiment, the present process comprises the following steps:
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d), wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent of step c).

In one embodiment, the crosslinking agent is contacted under mixing, in one or more steps, with the mixture obtained by contacting the natural ground calcium carbonate (GCC) with the plasticizer before, during or after said mixture is contacted with the polymer material. Preferably, the crosslinking agent is contacted under mixing, in one or more steps, with the mixture obtained by contacting the natural ground calcium carbonate (GCC) with the plasticizer before or during said mixture is contacted with the polymer material. More preferably, the crosslinking agent is contacted under mixing, in one or more steps, with the mixture obtained by contacting the natural ground calcium carbonate (GCC) with the plasticizer during said mixture is contacted with the polymer material.

It is preferred that the crosslinking agent is preferably added in one step to the natural ground calcium carbonate (GCC).

In a preferred embodiment, the crosslinking agent is thus contacted under mixing in one step with the mixture obtained by contacting the natural ground calcium carbonate (GCC) with the plasticizer during said mixture is contacted with the polymer material.

In this embodiment, the present process comprises the following steps:
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d), wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent is contacted under mixing, in one or more steps, with the mixture obtained by contacting the natural ground calcium carbonate (GCC) with the plasticizer before, during or after, preferably during, said mixture is contacted with the polymer material.

If the moisture-curing one-component polymer composition comprises further additives, the further additives of step d) are contacted under mixing, in one or more steps, with the mixture obtained by contacting the natural ground calcium carbonate (GCC) with the plasticizer before, during or after, preferably after, said mixture is contacted with the polymer material and the crosslinking agent.

Preferably, the further additives of step d) are contacted under mixing in one step with the mixture obtained by contacting the natural ground calcium carbonate (GCC) with the plasticizer before, during or after, preferably after, said mixture is contacted with the polymer material and the crosslinking agent.

In one embodiment, the further additives of step d) are contacted under mixing, in one or more steps, with the mixture obtained by contacting the natural ground calcium carbonate (GCC) with the plasticizer during or after said mixture is contacted with the polymer material and the crosslinking agent. Preferably, the further additives of step d) are contacted under mixing, in one or more steps, with the mixture obtained by contacting the natural ground calcium carbonate (GCC) with the plasticizer after said mixture is contacted with the polymer material and the crosslinking agent.

Preferably, the present process thus comprises the following steps:
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d), wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent is contacted under mixing, in one or more steps, with the mixture obtained by contacting the natural ground calcium carbonate (GCC) with the plasticizer before, during or after, preferably during, said mixture is contacted with the polymer material, and wherein the further optional additives of step d) are contacted under mixing, in one or more steps, with the mixture obtained by contacting the natural ground calcium carbonate (GCC) with the plasticizer before, during or after, preferably after, said mixture is contacted with the polymer material and the crosslinking agent.

In one embodiment, the process for preparing the moisture-curing one-component polymer composition consists of the steps
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d), wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent is contacted under mixing, in one or more steps, with the mixture obtained by contacting the natural ground calcium carbonate (GCC) with the plasticizer before, during or after, preferably during, said mixture is contacted with the polymer material, and wherein the further optional additives of step d) are contacted under mixing, in one or more steps, with the mixture obtained by contacting the natural ground calcium carbonate (GCC) with the plasticizer before, during or after, preferably after, said mixture is contacted with the polymer material and the crosslinking agent.

It is to be noted that the processing time for preparing the moisture-curing one-component polymer composition, i.e. the time from mixing the components together to the ready-to-use-composition, is excellent. More precisely, the processing time takes less than 180 min, preferably less than 120 min, more preferably less than 90 min. For example, the processing time takes from 5 to 60 min, preferably from 10 to 40 min and most preferably from 10 to 30 min.

It is to be noted that the same moisture-curing one-component polymer composition prepared in the absence of a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC), has a processing time of about 240 min.

Thus, the processing time for preparing the moisture-curing one-component polymer composition is decreased and thus improved compared to the same polymer composition prepared in the absence of the natural ground calcium carbonate (GCC) according to the present invention.

### The cured product, process and use

Another aspect of the present invention refers to a cured product obtained by curing the moisture-curing one-component polymer composition defined herein. Preferably, the cured product is a sealant or adhesive.

The cured product can be prepared by any method known to the skilled person. A suitable process for preparing the cured product comprises the steps of
i) providing the moisture-curing one-component polymer composition as defined herein, and
ii) curing the composition of step i) such that the cured product is formed.
   In a preferred embodiment, the process for preparing the cured product, preferably the sealant or adhesive, thus comprises the steps of
   a) providing a polymer material,
   b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
   c) providing a crosslinking agent and a plasticizer,
   d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
   e) contacting the components of step a), step b), step c) and optional step d) in any order, and
ii) curing the composition of step e) such that the cured product is formed.

In another preferred embodiment, the process for preparing the cured product, preferably the sealant or adhesive, thus comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d) wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent of step c), and
ii) curing the composition of step e) such that the cured product is formed.

In another preferred embodiment, the process for preparing the cured product, preferably the sealant or adhesive, thus comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d) wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent is contacted under mixing, in one or more steps, with the mixture obtained by contacting the natural ground calcium carbonate (GCC) with the plasticizer before, during or after, preferably during, said mixture is contacted with the polymer material, and
ii) curing the composition of step e) such that the cured product is formed.

In another preferred embodiment, the process for preparing the cured product, preferably the sealant or adhesive, thus comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d), wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent is contacted under mixing, in one or more steps, with the mixture obtained by contacting the natural ground calcium carbonate (GCC) with the plasticizer before, during or after, preferably during, said mixture is contacted with the polymer material, and wherein the further optional additives of step d) are contacted under mixing, in one or more steps, with the mixture obtained by contacting the natural ground calcium carbonate (GCC) with the plasticizer before, during or after, preferably after, said mixture is contacted with the polymer material and the crosslinking agent, and
ii) curing the composition of step e) such that the cured product is formed.

The curing in step ii) may be performed by any method known to the skilled person resulting in a curing of the one-component composition. However, it is appreciated that the polymer material is preferably a moisture-curing or moisture-sensitive polymer material such that the curing is preferably initiated by moisture (or water).

In one embodiment, curing step ii) is carried out at a humidity ranging from 20 % to below condensation (i.e. about 90 %). For example, curing step ii) is carried out at a humidity ranging from 30 % to below condensation (i.e. about 90 %).

Additionally or alternatively, curing step ii) is carried out at a temperature ranging from 5 to 100°C, preferably from 5 to 80°C or 5 to 60°C. Preferably, curing step ii) is carried out at about room temperature, i.e. from 5 to 35°C.

In one embodiment, curing step ii) is carried out at a temperature ranging from 5 to 35°C and at a humidity ranging from 30 % to below condensation (i.e. about 90 %).

Optionally, curing step ii) may be performed in combination with molding, such as compression molding. During compression molding, pressure is applied to force the composition into the defined shape of the mold, such that the composition is in contact with all areas of the mold, and the composition is cured in the mold, such that the product retains the desired shape.

Alternatively, the cured product obtained in curing step ii) may be shaped into the desired shape.

Thus, the process may comprise further steps such as processing/forming the cured product in any desired shape. Such steps of processing/forming are well known to the skilled person and can be e.g. carried out by shaping the cured product.

In one embodiment, the process for preparing the cured product comprises the steps of
i) providing the moisture-curing one-component polymer composition as defined herein,
ii) curing the composition of step i) such that the cured product is formed, and
iii) processing/forming the cured product into a desired shape during or after step ii).

In a preferred embodiment, the process for preparing the cured product, preferably the sealant or adhesive, thus comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d) in any order,
ii) curing the composition of step e) such that the cured product is formed, and
iii) processing/forming the cured product into a desired shape during or after step ii).

In another preferred embodiment, the process for preparing the cured product, preferably the sealant or adhesive, thus comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin,
e) contacting the components of step a), step b), step c) and optional step d) wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent of step c),
ii) curing the composition of step e) such that the cured product is formed, and
iii) processing/forming the cured product into a desired shape during or after step ii).

In another preferred embodiment, the process for preparing the cured product, preferably the sealant or adhesive, thus comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin,
e) contacting the components of step a), step b), step c) and optional step d) wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent is contacted under mixing, in one or more steps, with the mixture obtained by contacting the natural ground calcium carbonate (GCC) with the plasticizer before, during or after, preferably during, said mixture is contacted with the polymer material,
ii) curing the composition of step e) such that the cured product is formed, and
iii) processing/forming the cured product into a desired shape during or after step ii).

In another preferred embodiment, the process for preparing the cured product, preferably the sealant or adhesive, thus comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin,
e) contacting the components of step a), step b), step c) and optional step d), wherein firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent is contacted under mixing, in one or more steps, with the mixture obtained by contacting the natural ground calcium carbonate (GCC) with the plasticizer before, during or after, preferably during, said mixture is contacted with the polymer material, and wherein the further optional additives of step d) are contacted under mixing, in one or more steps, with the mixture obtained by contacting the natural ground calcium carbonate (GCC) with the plasticizer before, during or after, preferably after, said mixture is contacted with the polymer material and the crosslinking agent,
ii) curing the composition of step e) such that the cured product is formed, and
iii) processing/forming the cured product into a desired shape during or after step ii).

In particular, the elongation at break of the cured product, preferably the one-component sealant or adhesive, is excellent. More precisely, the cured product, preferably the one-component sealant or adhesive, has an elongation at break of more than 600 %, determined according to ISO 37:2011, preferably more than 700 %, more preferably more than 750 %. For example, the elongation at break is from more than 600 to 1 200 %, determined according to ISO 37:2011, preferably more than 700 to 1 100 %, more preferably more than 750 to 1 000 %.

It is to be noted that the elongation at break is determined according to ISO 37:2011 throughout the present application, if not indicated otherwise.

It is to be noted that the same cured product, preferably one-component sealant or adhesive, prepared in the absence of a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC), has an elongation at break, determined according to ISO 37:2011, of about 600 %.

Thus, the elongation at beak of the cured product, preferably the one-component sealant or adhesive, is increased and thus improved compared to the same cured product, preferably one-component sealant or adhesive, prepared in the absence of the natural ground calcium carbonate (GCC) according to the present invention.

In one embodiment, the cured product, preferably the one-component sealant or adhesive, has an elongation at break of more than 600 %, determined according to ISO 37:2011, preferably more than 700 %, more preferably more than 750 %, e.g. from more than 600 to 1 200 %, preferably more than 700 to 1 100 %, more preferably more than 750 to 1 000 %, and/or the processing time for preparing the moisture-curing one-component polymer composition takes less than 180 min, preferably less than 120 min, more preferably less than 90 min, e.g. from 5 to 60 min, preferably from 10 to 40 min and most preferably from 10 to 30 min.

For example, the cured product, preferably the one-component sealant or adhesive, has an elongation at break of more than 600 %, determined according to ISO 37:2011, preferably more than 700 %, more preferably more than 750 %, e.g. from more than 600 to 1 200 %, preferably more than 700 to 1 100 %, more preferably more than 750 to 1 000 %, or the processing time for preparing the moisture-curing one-component polymer composition takes less than 180 min, preferably less than 120 min, more preferably less than 90 min, e.g. from 5 to 60 min, preferably from 10 to 40 min and most preferably from 10 to 30 min. Preferably, the cured product, preferably the one-component sealant or adhesive, has an elongation at break of more than 600 %, determined according to ISO 37:2011, preferably more than 700 %, more preferably more than 750 %, e.g. from more than 600 to 1 200 %, preferably more than 700 to 1 100 %, more preferably more than 750 to 1 000 %, and the processing time for preparing the moisture-curing one-component polymer composition takes less than 180 min, preferably less than 120 min, more preferably less than 90 min, e.g. from 5 to 60 min, preferably from 10 to 40 min and most preferably from 10 to 30 min.

In view of this, the present invention relates in another aspect to the use of the natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC), for decreasing the processing time for preparing the moisture-curing one-component polymer composition and/or increasing the elongation at break of a cured product, preferably a sealant or adhesive, compared to a moisture-curing one-component polymer composition and cured product, preferably a sealant or adhesive, respectively, prepared in the absence of a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC).

The scope and interest of the invention will be better understood based on the following examples which are intended to illustrate certain embodiments of the present invention and are non-limitative.

### Examples

### 1. Measurement methods

In the following, measurement methods implemented in the examples are described.

### Particle size distribution

The weight median particle size dso(wt) and weight top cut particle size d₉₈(wt) is determined by the sedimentation method, which is an analysis of sedimentation behaviour in a gravimetric field. The measurement is made with a Sedigraph^{™} 5120, Micromeritics Instrument Corporation. The method and the instrument are known to the skilled person and are commonly used to determine grain size of fillers and pigments. The measurement is carried out in an aqueous solution of 0.1 wt.-% Na₄P₂O₇. The samples were dispersed using a high speed stirrer and sonicated.

The processes and instruments are known to the skilled person and are commonly used to determine the particle size of fillers and pigments.

### Specific surface area (SSA)

The specific surface area was measured via the BET method according to ISO 9277:2010 using nitrogen as adsorbing gas on a Micromeritics ASAP 2460 instrument from Micromeritics. The samples were pretreated in vacuum (10⁻⁵ bar) by heating at 150 °C for a period of 60 min prior to measurement.

### Amount of surface-treatment layer

The amount of the treatment layer on the magnesium and/or calcium ion-containing material is calculated theoretically from the values of the BET of the untreated magnesium and/or calcium ion-containing material and the amount of the one or more compound(s) that is/are used for the surface-treatment. It is assumed that 100 % of the one or more compound(s) are present as surface treatment layer on the surface of the magnesium and/or calcium ion-containing material.

### Residual moisture content

The residual moisture content was determined by thermogravimetric analysis (TGA). The equipment used to measure the TGA was the Mettler-Toledo TGA/DSC1 (TGA 1 STARe System) and the crucibles used were aluminium oxide 900 µl. The method consists of several heating steps under air (80 mL/min). The first step was a heating from 25 to 105°C at a heating rate of 20°C/minute (step 1), then the temperature was maintained for 10 minutes at 105°C (step 2), then heating was continued at a heating rate of 20°C/minute from 105 to 400 °C (step 3). The temperature was then maintained at 400 °C for 10 minutes (step 4), and finally, heating is continued at a heating rate of 20°C/minute from 400 to 600 °C (step 5). The residual moisture content is the cumulated weight loss after steps 1 and 2.

### Shore A hardness

Shore A hardness was determined according to DIN 53505.

### Maple/ Maple Lap Shear

Maple/ Maple Lap Shear was determined according to DIN EN 14293:2006-10. For determining the shear strength of soft adhesives two mosaic parquet finger were lap bonded with the thickness of the adhesive gap being approximately 1 mm. After conditioning (14 days, 23 ± 1 ° C, 50 ± 5% relative humidity), the test specimens were clamped in a tensile testing machine and a tensile force was applied until breakage.

### Skin formation time

To measure the skin formation time, a round bead of composition of approximately 3 mm diameter was applied on a polyethylene film substrate under standard conditions (23 ± 1 ° C, 50 ± 5% relative humidity). The skin formation time (Skin time, skin-over time, SOT. skinning time) was determined as the elapsed time from the application to the bead to the time it took to leave no residue on a LDPE pipette, when lightly tapped on the surface of the composition.

### Mechanical properties

To determine the mechanical properties, films of about 2 mm thickness were produced by extruding the composition from an adhesive cartridge into a negative PTFE mould of 2.0 mm thickness, 35 mm width and 250 mm length. The composition was allowed to cure for 7 days under standard conditions. Dumbbells of dimensions according to ISO 37:2011, Table 2, Type 2 were punched out of the films and tested for tensile strength, elongation at break and modulus of elasticity (at 100% elongation) in accordance with ISO 37:2011.

### Sag resistance (Boing sag test)

The sag resistance (or Boeing sag test) referred to herein conforms to ASTM Specification D 2202-73 and measures the ability of a joint sealant composition to retain shape when placed in a vertical receptacle called a flow test jig. The sag resistance value as referred to in the Specification and claims hereof is the amount of sag or slump of the sealant composition in inches as indicated by the test jig after 5 minutes at standard conditions (23 ± 1 ° C, 50 ± 5% relative humidity)

### 2. Examples

Inventive and comparative 1K polymer compositions as set out in the following table 1 were prepared.

### Filler material

### GCC1 (marble)

A natural ground calcium carbonate material (GCC) surface treated with 3.6 wt.-% stearic acid and characterized by: a weight median diameter *d*₅₀ of 0.3 µm, a specific surface area (BET) of 13 m²/g, a moisture content < 0.08%, a moisture absorption < 2500 ppm, Loss of weight at 400 °C > 1.0%.

### GCC2 (chalk)

GCC2 is a commercial grade natural ground calcium carbonate material (GCC) surface treated with 2.5 wt.-% stearic acid which is sold under the name Omyabond 302 by Omya International AG. GCC2 is characterized by: a weight median diameter *d*₅₀ of 0.3 µm, a specific surface area (BET) of 20 m²/g, a moisture content > 0.4%, a moisture absorption > 3000 ppm, Loss of weight at 400 °C > 1.0%.

### PCC

PCC is a commercial (synthetic) precipitated calcium carbonate sold under the name of UltraPflex 100, by Specialty Minerals Inc.. The PCC is a stearate surface treated precipitated calcium carbonate with nominal primary particle size *d*₅₀ of 70 nm and BET surface area of 21 m²/g, a moisture content > 0.3%, a moisture absorption > 3000 ppm, Loss of weight at 400 °C > 1.0%

**Table 1: Inventive and comparative compositions**

| | | Inventive 1 | Comparative A | Comparative B |
|---|---|---|---|---|
| | Compounds by parts by weights | | | |
| A | Desmoseal M280 (Prepolymer) | 25.5 | 25.5 | 25.5 |
| B | Incozol BH (Latent crosslinking agent) | 1.1 | 1.1 | 1.1 |
| C | Mesamoll (Plasticizer) | 25.5 | 25.5 | 25.5 |
| D1 | Marble (GCC1) | 46.9 | | |
| D2 | Chalk (GCC2) | | 46.9 | |
| D3 | (Synthetic) precipitated calcium carbonate (PCC) | | | 46.9 |
| E | GLYEO (Adhesion promotor) | 1.1 | 1.1 | 1.1 |

The sealant compositions were prepared by mixing the components at room temperature. Sealants components A, B, C, D1-D3 and E are defined above.

The inventive 1K - PU composition was prepared by mixing plasticizer C and inventive product D1 in a 150 ml speed mixer cup (PP 250 ml) according to Table 1 above. The mixture was stirred in a SpeedMixer DAC 600.1 FVZ at 2300 rpm for 30 seconds at ambient temperature. Components A, B and E were added in the amounts according to Table 1 above. The mixture was stirred in a SpeedMixer DAC 600.1 FVZ at 2300 rpm for 30 seconds at ambient temperature.

The comparative A 1K - PU composition was prepared by mixing plasticizer C and product D2 in a 150 ml speed mixer cup (PP 250 ml) according to Table 1 above. The mixture was stirred in a SpeedMixer DAC 600.1 FVZ at 2300 rpm for 30 seconds at ambient temperature. Components A, B and E were added in the amounts according to Table 1 above. The mixture was stirred in a SpeedMixer DAC 600.1 FVZ at 2300 rpm for 30 seconds at ambient temperature.

The comparative B 1K - PU composition was prepared by mixing plasticizer C and product D3 in a 150 ml speed mixer cup (PP 250 ml) according to Table 1 above. The mixture was stirred in a SpeedMixer DAC 600.1 FVZ at 2300 rpm for 30 seconds at ambient temperature. Components A, B and E were added in the amounts according to Table 1 above. The mixture was stirred in a SpeedMixer DAC 600.1 FVZ at 2300 rpm for 30 seconds at ambient temperature.

The results for the inventive and comparative 1K polymer compositions are shown in the following tables 2 and 3.

**Table 2: Sag resistance and storage stability of the inventive and comparative 1K polymer compositions**

| Properties of compositions | Inventive 1 | Comparative A | Comparative B |
|---|---|---|---|
| Sag resistance (mm) | < 0.5 | < 0.5 | >10 |
| after 7d days storage at room temperature | easily extrudable | solid, not extrudable | Solid, not extrudable |
| after 7d days storage at 50°C | still extrudable | solid, not extrudable | solid, not extrudable |

**Table 3: mechanical properties of the inventive and comparative 1K polymer compositions**

| Properties of compositions | Inventive 1 | Comparative A | Comparative B |
|---|---|---|---|
| Skin time (minutes) | 150 | 70 | N/A |
| 100% Tensile modulus (MPa) | 0.2 | 0.2 | N/A |
| Tensile strength (MPa) | 1.9 | 1.9 | N/A |
| Elongation at break (%) | 840 | 600 | N/A |

Inventive 1K sealant compositions 2 and 3 as set out in the following table 4 were prepared.

**Table 4: Inventive sealant compositions 2 and 3 based on HDI* and MDI****

| | | Inventive 2 | Inventive 3 |
|---|---|---|---|
| | ***Components*** | ***Weight* %** | |
| Plasticizer | Mesamoll (Lanxess) | 14.700 | 0.000 |
| Plasticizer | DIDP (ExxonMobil) | 0.000 | 14.500 |
| Pigment paste | TiO₂ Dispersion | 9.800 | 9.600 |
| Filler | GCC1 | 44.800 | 44.100 |
| Moisture scavenger | P-Toluenesulfonyl isocyanate (Sigma Aid rich) | 0.8 | 10.8 |
| Polyol | Desmophen 2061 BD (Covestro) | 8.200 | 8.100 |
| Polyol | Desmophen 5034 BT (Covestro) | 13.300 | 13.100 |
| Solvent | Xylene (Sigma Aldrich) | 3.300 | 3.200 |
| Diisocyanate (HDI*) | Desmodur H (Covestro) | 2.540 | 0.000 |
| Diisocyanate (MDI**) | Rubinate 9433 (Huntsman) | 0.000 | 4.000 |
| Catalyst | Coscat 83 (Palmer Holland) | 0.042 | 0.042 |
| Moisture scavenger | P-Toluenesulfonyl isocyanate (Sigma Aldrich) | 0.500 | 0.500 |
| Stabilizer | Eversorb 90 (Everlight Chemical) | 0.500 | 0.500 |
| Adhesion promoter | Dynasylan GLYEO (Evonik) | 1.000 | 1.000 |
| Catalyst | Dibutyltin dilaurate (Sigma Aldrich) | 0.500 | 0.500 |

| | | | |
|---|---|---|---|
| *Hexamethylenediisocyanate **Methylenediphenyldiisocyanate | | | |

A pigment paste was prepared by pre-dispersing an equal weight of TiO₂ dispersion (Kronos 2500) and corresponding plasticizer Mesamoll (Lanxess) or DIDP (ExxonMobil; CAS-68515491). The mixture was homogenized at 2300 rpm for 30 seconds. In a second step, the so prepared pigment paste and the GCC 1 of the present invention were homogenously mixed in a planetary mixer (PC Laborsystems) for 10 minutes under the following conditions: 1000 rpm stirring with a dissolver at a temperature between 30°C and 70°C at full vacuum (-0.8 atm or less). Thereafter the stirring speed was reduced to 200 rpm and the mixer was vented to reach ambient pressure. Moisture scavenger was added, and the vacuum restored and stirring at 200 rpm was continued for another 15 minutes. Thereafter, the mixer was vented again and the polyol, solvent, diisocyanate and catalyst were added and stirred for about 60 minutes in a temperature window of 70°C to 75°C at 200 rpm. The mixture was let to cool down to a temperature of 30°C to 40°C and the remaining compound, adhesion promotor and stabilizer were added and the mixture was homogenized for 15 minutes at 200 rpm in a light vacuum (-0.2 atm). Thereafter the mixture was discharged and transferred into a sealant cartridge for testing and storage.

The mechanical properties of the inventive 1 K sealant compositions 2 and 3 are set out in the following table 5.

**Table 5: mechanical properties of the inventive compositions 2 and 3**

| | Inventive 2 | Inventive 3 |
|---|---|---|
| Sag resistance (mm) | < 0.5 | < 0.5 |
| Skin time (minutes) | 170 | 60 |
| Elongation at break (%) | > 626 | > 670 |
| Tensile strength (MPa) | 0.9 | 1.3 |
| 100% Tensile modulus (MPa) | 0.3 | 0.3 |
| Shore A | 22 | 24 |

Inventive 1K sealant compositions 4 to 8 as set out in the following table 6 were prepared.

**Table 6: Inventive sealant compositions 4-8**

| | | 4 | 5 | 6 | 7 | 8 |
|---|---|---|---|---|---|---|
| Polyol | Dongda DL 2000D (Shandong Bluestar Dongda Co.) | 5.00 | 7.50 | 5.00 | 5.00 | 5.00 |
| Polyol | EP 330 NG (Shandong Bluestar Dongda Co.) | 8.10 | 12.20 | 8.10 | 8.10 | 8.10 |
| Solvent | Xylene (Sigma Aldrich) | 2.00 | 3.00 | 2.00 | 2.00 | 2.00 |
| Filler | GCC1 | 18.00 | 27.00 | 18.00 | 18.00 | 18.00 |
| Diisocyanate (MDI) | Rubinate 9433 (Huntsman) | 3.20 | 4.80 | 3.20 | 3.20 | 3.20 |
| Catalyst | Dibutyltin dilaurate (Sigma Aldrich) | 0.03 | 0.03 | 0.03 | 0.03 | 0.03 |
| Adhesion promoter | Dynasylan GLYMO (Evonik) | 0.40 | 0.60 | 0.40 | 0.40 | 0.40 |
| Moisture scavenger | p-Toluenesulfonyl isocyanate (Sigma Aldrich) | 0.20 | 0.00 | 0.2 | 0.2 | 0.2 |
| Moisture scavenger | Additive OF (Borchers) | 0.00 | 0.30 | 0.00 | 0.00 | 0.00 |
| Catalyst | Dibutyltin dilaurate (Sigma Aldrich) | 0.05 | 0.05 | 0.05 | 0.05 | 0.05 |
| Latent hardener | Incozol BH (Incorez) | 1.10 | 0.00 | 0.00 | 0.00 | 0.00 |
| Latent hardener | Incozol EH (Incorez) | 0.00 | 1.60 | 0.40 | 0.80 | 1.10 |

A mixture of plasticizer and the GCC 1 of the present invention was homogenized at 2300 rpm for 30 seconds. In a second step, the so prepared mixture was homogenously mixed in a planetary mixer (PC Laborsystems) for 10 minutes under the following conditions: 1000 rpm stirring with a dissolver at a temperature between 30°C and 70°C at full vacuum (-0.8 atm or less). Thereafter, the stirring speed was reduced to 200 rpm and the mixer was vented to reach ambient pressure. Moisture scavenger was added, and the vacuum restored and stirring at 200 rpm was continued for another 15 minutes. Thereafter, the mixer was vented again and the polyol, solvent, diisocyanate and catalysts were added and stirred for about 60 minutes in a temperature window of 70°C to 75°C at 200 rpm. The mixture was let to cool down to a temperature of 30°C to 40°C and the remaining compounds, adhesion promotor and latent hardener were added and the mixture was homogenized for 15 minutes at 200 rpm in a light vacuum (-0.2 atm). Thereafter, the mixture was discharged and transferred into a sealant cartridge for testing and storage.

The mechanical properties of the inventive 1K sealant compositions 4 to 8 are set out in the following table 7.

**Table 7: mechanical properties of the inventive compositions 4-8**

| | 4 | 5 | 6 | 7 | 8 |
|---|---|---|---|---|---|
| Skin time (minutes) | 15 | 20 | 10 | 10 | 10 |
| Elongation (%) | 368 | 335 | 618 | 502 | 548 |
| Tensile Strength (MPa) | 0.7 | 1.8 | 3.0 | 2.2 | 3.1 |
| 100% Tensile modulus (MPa) | 0.4 | 0.9 | 0.9 | 0.9 | 0.9 |
| Shore A | 37 | 47 | 45 | 47 | 55 |
| Maple/ Maple Lap Shear | | | | | |
| Shear Strength (MPa) | 2.2 | 2.1 | 2.2 | 3.2 | 2.5 |

## Claims

1. A moisture-curing one-component polymer composition comprising a polymer material and a natural ground calcium carbonate (GCC), the natural ground calcium carbonate (GCC) having
i) a weight median particle size *d*₅₀ value measured by the sedimentation method of ≤ 0.8 µm, and
ii) a specific surface area (BET) of at least 10 m²/g as measured using nitrogen and the BET method according to ISO 9277:2010, and
iii) a residual moisture content of ≤ 0.2 wt.-%, based on the total dry weight of the natural ground calcium carbonate (GCC).

2. The moisture-curing one-component polymer composition according to claim 1, wherein the natural ground calcium carbonate (GCC) is selected from the group consisting of marble, limestone, dolomite, chalk and mixtures thereof.

3. The moisture-curing one-component polymer composition according to claims 1 or 2, wherein the natural ground calcium carbonate (GCC) has
i) a weight median particle size *d*₅₀ value measured by the sedimentation method of ≤ 0.6 µm, preferably of ≤ 0.4 µm, more preferably in the range from 0.1 µm to 0.4 µm and most preferably in the range from 0.2 µm to 0.4 µm, and/or
ii) a top cut (*d*₉₈) measured by the sedimentation method of 0.3 to 3.0 µm, more preferably of 0.5 to 2.0 µm, and most preferably of 0.5 to 1.5 µm, and/or
iii) a specific surface area (BET) of from 10 to 40 m²/g as measured using nitrogen and the BET method according to ISO 9277:2010, preferably from 10 to 32 m²/g, more preferably from 12 to 28 m²/g and most preferably from 12 to 25 m²/g, and/or
iv) a residual moisture content of ≤ 0.15 wt.-%, e.g. from 0.05 to ≤ 0.15 wt.-%, and most preferably of ≤ 0.1 wt.-%, e.g. from 0.05 to ≤ 0.1 wt.-%, based on the total dry weight of the natural ground calcium carbonate (GCC).

4. The moisture-curing one-component polymer composition according to any one of claims 1 to 3, wherein the natural ground calcium carbonate (GCC) is treated with at least one surface-treatment agent selected from the group consisting of
I) a phosphoric acid ester blend of one or more phosphoric acid mono ester and/or salts thereof and/or one or more phosphoric acid di-ester and/or salts thereof, and/or
II) at least one saturated or unsaturated aliphatic linear or branched carboxylic acid and/or salts thereof, preferably at least one aliphatic carboxylic acid having a total amount of carbon atoms from C4 to C24 and/or a salt thereof, more preferably at least one aliphatic carboxylic acid having a total amount of carbon atoms from C12 to C20 and/or a salt thereof, most preferably at least one aliphatic carboxylic acid having a total amount of carbon atoms from C16 to C18 and/or a salt thereof and/or
III) at least one mono-substituted succinic anhydride consisting of succinic anhydride mono-substituted with a group selected from a linear, branched, aliphatic and cyclic group having a total amount of carbon atoms from at least C2 to C30 in the substituent and/or salts thereof, and/or
IV) at least one polydialkylsiloxane, and
V) mixtures of one or more materials according to I) to IV).

5. The moisture-curing one-component polymer composition according to any one of claims 1 to 4, wherein the polymer material is a moisture-curing polymer material, preferably the polymer material is selected from the group comprising polyurethane, silyl-modified polyurethane, polyurea, silyl-modified polyurea, silicone, polyether polymers with terminal silane groups, polysulfide polymers with terminal silane groups, poly(meth)acrylate, and mixtures thereof.

6. The moisture-curing one-component polymer composition according to any one of claims 1 to 5, wherein the polymer composition comprises the natural ground calcium carbonate (GCC) in an amount ranging from 20 to 65 wt.-%, based on the total weight of the polymer composition, preferably from 30 to 60 wt.-%, more preferably from 35 to 55 wt.-% and most preferably from 35 to 50 wt.-%.

7. The moisture-curing one-component polymer composition according to any one of claims 1 to 6, wherein the polymer composition further comprises a crosslinking agent and plasticizer as additives and optionally further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin.

8. The moisture-curing one-component polymer composition according to any one of claims 4 to 7, wherein the at least one surface-treatment agent is present on the natural ground calcium carbonate (GCC) in an amount ranging from 0.5 to 4.5 wt.-% based on the total weight of the natural ground calcium carbonate (GCC).

9. The moisture-curing one-component polymer composition according to any one of claims 1 to 8, wherein the polymer composition is a sealant or adhesive composition.

10. A cured product, preferably a sealant or adhesive, obtained by curing the moisture-curing one-component polymer composition of any one of claims 1 to 9, wherein the cured product has an elongation at break of more than 600 %, determined according to ISO 37:2011, preferably more than 700 %, more preferably more than 750 %.

11. A process for preparing a moisture-curing one-component polymer composition as defined in any one of claims 1 to 9, wherein the process comprises the steps of
a) providing a polymer material,
b) providing a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC),
c) providing a crosslinking agent and a plasticizer,
d) optionally providing further additives such as colouring pigments, fibers, e.g. cellulose, glass or wood fibers, dyes, waxes, lubricants, oxidative- and/or UV-stabilizers, curing agents, adhesion promoter, antioxidants, rheological modifier such as PVC, and other fillers, such as carbon black, TiO₂, mica, clay, precipitated silica, fumed silica, talc or calcined kaolin, and
e) contacting the components of step a), step b), step c) and optional step d) in any order.

12. The process according to claim 11, wherein in contacting step e) firstly the natural ground calcium carbonate (GCC) of step b) is contacted under mixing, in one or more steps, with the plasticizer of step c) and the mixture obtained is contacted under mixing, in one or more steps, with the polymer material of step a) and the crosslinking agent of step c).

13. The process according to claim 12, wherein the crosslinking agent is contacted under mixing, in one or more steps, with the mixture obtained by contacting the natural ground calcium carbonate (GCC) with the plasticizer before, during or after, preferably during, said mixture is contacted with the polymer material.

14. The process according to claims 12 or 13, wherein the further optional additives of step d) are contacted under mixing, in one or more steps, with the mixture obtained by contacting the natural ground calcium carbonate (GCC) with the plasticizer before, during or after, preferably after, said mixture is contacted with the polymer material and the crosslinking agent.

15. A process for preparing a cured product, preferably a sealant or adhesive, as defined in claim 10, wherein the process comprises the steps of
i) providing the moisture-curing one-component polymer composition obtained in any one of claims 11 to 14, and
ii) curing the composition of step i) such that the cured product is formed.

16. Use of a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC), for decreasing the processing time for preparing a moisture-curing one-component polymer composition and/or increasing the elongation at break of a cured product, preferably a sealant or adhesive, compared to a moisture-curing one-component polymer composition and cured product, preferably a sealant or adhesive, respectively, prepared in the absence of a natural ground calcium carbonate (GCC) having i) a weight median particle size *d*₅₀ value measured by the sedimentation method of ≤ 0.8 µm, and ii) a specific surface area (BET) of at least 10 m²/g as measured using nitrogen and the BET method according to ISO 9277:2010, and a residual moisture content of ≤ 0.2 wt.-%, based on the total dry weight of the natural ground calcium carbonate (GCC).
